# EUROPÄISCHE PATENTSCHRIFT

(11) **EP 4 079 626 B1**
(45) Veröffentlichungstag und Bekanntmachung des Hinweises auf die Patenterteilung: **02.12.2026**
(21) Anmeldenummer: 22169421.9
(22) Anmeldetag: 22.04.2022
(51) Int. Cl.: B64C 1/20, B64D 9/00

(54) **FRACHTDECK, FLUGZEUG UND MITTELFÜHRUNGSRIEGEL FÜR EIN FLUGZEUG**
CARGO DECK, AIRCRAFT AND CENTRAL GUIDE BOLT
PONT DE FRET, AÉRONEF ET BARRE DE GUIDAGE CENTRAL POUR UN AÉRONEF

(30) Priorität: 23.04.2021 DE 102021110523
(43) Veröffentlichungstag der Anmeldung: 26.10.2022
(73) Patentinhaber: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Meissner Bolte Partnerschaft mbB

(56) Entgegenhaltungen:
- EP-A2- 2 418 145
- DE-A1- 102019 124 312
- GB-A- 2 431 148
- US-A- 3 906 870
- US-A1- 2005 246 057
- US-A1- 2012 312 920
- US-A1- 2019 248 499

## Beschreibung

Die Erfindung betrifft ein Frachtdeck für ein Flugzeug.

Flugzeuge werden für verschiedene Einsatzzwecke entwickelt, z.B. als Passagierflugzeug oder Frachtflugzeug, werden im Laufe deren Lebensdauer jedoch auch für unterschiedliche Zwecke modifiziert und eingesetzt. Dabei werden Flugzeuge für den Passagiertransport nach einer entsprechenden Einsatzdauer vorwiegend für den Transport von Frachtgütern bzw. Frachtstücken verwendet. Die Flugzeuge können generell ein Hauptdeck ("Main Deck") und ein unteres Deck ("Lower Deck") aufweisen, in dem während des Einsatzes des Flugzeugs für den Passagiertransport Frachtstücke transportiert werden.

Bei dem Transport von Ladung in Flugzeugen werden häufig Frachtstücke, z.B.

Container oder Paletten ("Unit Load Devices - ULDs") verwendet, die quaderförmig oder trapezförmig sind oder eine Form mit einer speziellen Außenkontur aufweisen. Derartige Container oder Paletten können abhängig vom Laderaum des Flugzeugs längsgeladen oder quergeladen werden. So gibt es für Container und Paletten, beispielsweise für die zivile Luftfahrt, folgende im Zusammenhang mit dieser Anmeldung relevante Normgrößen. Die nachfolgenden genormten Abmessungen der Container und Paletten sind jeweils in Länge x Breite x Höhe angegeben.

Container und Paletten ("ULDs") werden, wie allgemein bekannt, gemäß einer Regelung der "International Air Transport Association" (IATA) durch drei Buchstaben eingestuft. Nachfolgend werden lediglich die Wichtigsten erläutert:
- Der erste Buchstabe definiert die Art des Frachtstückes. Der Buchstabe A weist auf einen Container oder der Buchstabe P auf eine Palette hin;
- Der zweite Buchstabe gibt eine Auskunft über die Bodengröße, d.h. die Grundfläche des Frachtstücks, und
- Der dritte Buchstabe beschreibt die Kontur oder die Bauart des Frachtstücks.

Container und Paletten für den Transport im Hauptdeck eines Flugzeugs weisen im Wesentlichen folgende genormten Abmessungen auf:
- 223,5 x 317,5 x 243,8 cm (88 x 125 x 96 Zoll). Diese Abmessungen treffen auf AAJ Container und PAG Paletten zu;
- 223,5 x 317,5 x 208,2 cm (88 x 125 x 82 Zoll). Solche Abmessungen weisen bspw. AAA, AAC, AAY und AAZ Container und PAG Paletten auf;
- 243,8 x 317,5 x 243,8 cm (96 x 125 x 96 Zoll). Derartige Frachtstücke sind als AMA und AMJ Container sowie PMC Paletten bekannt;
- 243,8 x 497,8 cm (96 x 196 Zoll) oder 243,8 x 605,7 cm (96 x 238,5 Zoll). Diese Abmessungen entsprechen der Grundfläche von Paletten mit einer spezifischen Kontur, die sich z.B. aus der Kontur eines Triebwerks oder eines Fahrzeugs oder von Sonderfracht ergibt. Derartige Paletten werden herkömmlicherweise als PRA oder PGA Paletten bezeichnet;
- 223,5 x 274,3 cm (88 x 108 Zoll) und 137,1 x 223,5 cm (54 x 88 Zoll). Diese Abmessungen entsprechen der Grundfläche von Paletten mit einer spezifischen Kontur, die durch militärische Güter, bspw. Fracht oder ISU Container, bestimmt wird. Derartige Paletten werden als HCU-6E, PBN oder HCU-12E Paletten bezeichnet.

Container und Paletten für den Transport im unteren Deck eines Flugzeugs weisen im Wesentlichen folgende genormte Abmessungen auf:
- Die nachfolgenden Abmessungen entsprechen der Grundfläche von Containern oder Paletten mit einer spezifischen Kontur. Die Kontur wird dabei durch eine Kontur des unteren Decks bzw. der Frachtraumkontur des Flugzeugs und/oder durch eine benötigte Beladehöhe für spezifische Fracht und/oder durch eine bereits bestehende genormte Frachtstückkontur bestimmt.
- 223,5 x 317,5 cm (88 x 125 Zoll) oder 243,8 x 317,5 cm (96 x 125 Zoll). Paletten mit solchen Grundflächen werden als PAG Paletten oder PMC Paletten bezeichnet;
- 153,4 x 156,2 cm (60,4 x 61,5 Zoll). Diese Grundfläche trifft auf AKH und AKG Container sowie auf PKC Paletten zu;
- 156,2 x 243,8 cm (61,5 x 96 Zoll). Dies entspricht der Grundfläche von PNA Paletten;
- 153,4 x 243,8 cm (60,4 x 96 Zoll). Dies entspricht der Grundfläche von PQA Paletten; und
- 153,4 x 119,4 cm (60,4 x 47 Zoll). Dies entspricht der Grundfläche von PPA Paletten.

Zum Festhalten und Führen derartiger genormter und auch nicht-genormter Frachtstücke werden auf dem Frachtdeck montierte Funktionseinheiten, z.B. Riegel, Seitenführungen, etc., verwendet.

Für eine optimale Auslastung eines Frachtraums ist es notwendig, eine Vielzahl von Konfigurationsmöglichkeiten anzubieten, wobei ein schnelles Umrüsten des Frachtdecks eine hohe Priorität genießt. Geeignete Funktionseinheiten müssen schnell und einfach anbringbar und umkonfigurierbar sein, da die Kosten für das Betreiben von entsprechenden Flugzeugen sehr hoch sind. Des Weiteren soll die Konfiguration bzw. Umrüstung sehr einfach durchführbar sein, da das Personal, das diese Umkonfigurationen durchführt, häufig keine oder lediglich eine schlechte Schulung für die verwendeten Frachtdecks genossen hat. Hinzu kommt, dass die Ausstattung des Frachtdecks, insbesondere die Funktionseinheiten sehr robust sein müssen, da diese sehr hohen Lasten ausgesetzt sind und eine schonende Behandlung aufgrund des hohen Zeitdrucks beim Be- und Entladen nicht gefordert werden kann. Ein Frachtdeck ist häufig der Nässe, hohen Temperaturunterschieden, Staub und anderen rohen Einflüssen ausgesetzt. Ein defektes Frachtdeck - auch bereits ein defektes Funktionselement des Frachtdecks - kann dazu führen, dass das entsprechende Flugzeug für mehrere Tage nicht eingesetzt werden kann. Ein derartiger Ausfall ist sehr teuer.

Es ist bekannt, dass sich die Bestückung des Frachtdecks mit dem Frachtsystem bei dem Gesamtgewicht des Flugzeugs deutlich bemerkbar macht.

Das Dokument US 2019/248499 A1 beschreibt eine Vorrichtung zur Anpassung von Flugzeugböden sowie zugehörige Verfahren. Der Boden eines Flugzeugs umfasst einen Bodenbalken, eine Sitzschiene und eine Kappe, die mit der Sitzschiene verbunden ist und über die Sitzschiene und den Bodenbalken verläuft. Ein Bodenpaneel ist mit der Kappe ausgerichtet.

Das Dokument US 2012/312920 A1 beschreibt einen Frachtraumboden für den Frachtraum eines Flugzeugs. Der Boden besteht aus mehreren Paneelen, die Schienensegmente zur Befestigung von Frachtelementen umfassen, darunter vollständige und teilweise Sitzschienensegmente.

Das Dokument EP 2 418 145 A2 beschreibt einen Frachtraumboden eines Flugzeugs, der in zwei Hälften geteilt ist und Riegelelemente zum Sichern genormter Frachtbehälter, wie Paletten oder Container, enthält. Diese Riegelelemente sind in nur einer der Hälften angeordnet.

Das Dokument US 2005/246057 A1 beschreibt ein Logistiksystem zur Überprüfung der Verladung von Fracht in ein Flugzeug. Das System vergleicht eine gewünschte mit der tatsächlichen Konfiguration der Rückhaltevorrichtungen und prüft, ob das Flugzeug korrekt beladen werden kann.

Das Dokument US 3 906 870 A beschreibt ein Frachthandlingsystem für Flugzeuge, das versenkbare Frachtrückhaltevorrichtungen und Führungselemente umfasst. Diese können zur Ladungssicherung bei Bedarf ausgefahren und zur besseren Beladung wieder eingezogen werden.

Das Dokument GB 2 431 148 A beschreibt eine Mittelrückhaltevorrichtung mit einem mittleren Führungselement sowie übersteuerbaren Führungselementen an beiden Enden. Diese Elemente können in verschiedene Positionen gedreht und fixiert werden, um Fracht zu sichern oder die Vorrichtung zu übersteuern.

Das Dokument DE 10 2019 124312 A1 beschreibt eine Seitenführungsvorrichtung zur Führung und Befestigung von Frachtstücken in einem Flugzeug. Die Vorrichtung umfasst einen in Längsrichtung verlaufenden Befestigungsrahmen mit mehreren quer verlaufenden Aussparungen und einer festsetzbaren Seitenführungsvorrichtung.

Letztendlich gilt es, stets ein optimal belastbares Frachtdeck mit einem hohen Grad an Funktionalität bereitzustellen, wobei das Gewicht so gering wie möglich gehalten werden muss.

Ausgehend von diesem Stand der Technik ist es Aufgabe der vorliegenden Erfindung, ein verbessertes Frachtdeck anzubieten. Insbesondere soll ein hochfunktionales Frachtdeck bereitgestellt werden, das ein sehr geringes Gewicht hat und gleichzeitig eine Vielzahl von unterschiedlichen Ladekonfigurationen ermöglicht.

Die Aufgabe wird durch den Gegenstand nach Anspruch 1 gelöst.

Insbesondere wird die Aufgabe durch ein Frachtdeck für ein Flugzeug mit einer Mittelebene gelöst, die sich mittig entlang der Längsrichtung des Frachtdecks erstreckt. Das Frachtdeck umfasst:
- erste Lochschienen, insbesondere Sitzschiene, die parallel zur Mittelebene in einem Bereich zwischen 10 und 20 cm von der Mittelebene beabstandet angeordnet sind.

Ein Kern der Erfindung besteht also darin, eine möglichst minimale Anzahl von Lochschienen auf dem Frachtdeck bereitzustellen, wobei diese Lochschienen auf der einen Seite das Frachtdeck versteifen und auf der anderen Seite eine Kulisse, insbesondere eine Lochschienenkulisse bereitstellen, um Funktionseinheiten zu verankern bzw. zu befestigen. Das Befestigen von Funktionseinheiten in Lochschienen, beispielsweise Sitzschienen, ist in dem Fachbereich hinreichend bekannt. Als Lochschienen im Sinne dieser Erfindung werden Schienen verstanden, die derart bemessen sind, dass sie sich über mehrere Querträger eines Flugzeugs erstrecken können. Vorzugsweise sind diese Lochschienen zur Versteifung des Frachtdecks an den Querträgern befestigt. Die Lochschienen weisen erfindungsgemäß eine durchgehende Lochschienenkulisse oder unterbrochene Abschnitte von Lochschienenkulissen auf.

Durch die Lochschienenkulissen werden Montagelinien definiert. In einer Ausführungsform verläuft die Montagelinie durch eine Symmetrieebene der Lochschienenkulisse in Längsrichtung. In einer Ausführungsform entspricht die Montagelinie dieser Symmetrieebene.

Als Mittelebene im Sinne dieser Erfindung wird eine Ebene verstanden, die durch die X- und Z-Richtung des Flugzeugs definiert ist, wobei diese Mittelebene das Frachtdeck in zwei gleichgroße, zumindest teilweise symmetrische Abschnitte unterteilt. Vorzugsweise enthält die Mittelebene die Null Buttock Line (BL0) des Flugzeugs.

Durch die Positionierung der Lochschiene an den oben angegebenen Stellen bzw. Bereichen ist es möglich, ein Flugzeugdeck mit einer minimalen Anzahl von Lochschienen, beispielsweise weniger als neun oder gar weniger als acht Lochschienen pro Segment des Frachtdecks (über die gesamte Breite) auszustatten. Gleichzeitig werden diverse Ladekonfigurationen der Container und Paletten, wie sie eingangs aufgezählt wurden, unterstützt. Das heißt, dass die ULDs sehr effizient in dem Frachtraum angeordnet werden können, wobei die Lochschienen Haltepunkte für die Funktionseinheiten bereitstellen. Insbesondere die zweiten und dritten Lochschienen sind derart angeordnet, dass sie eine Absicherung der ULDs in Längsrichtung (X-Richtung) ermöglichen.

In einer Ausführungsform sind die Lochschienen zumindest in einem Segment des Frachtdecks wie folgt positioniert:
- erste Lochschiene: Montagelinie ca. 16 oder 17 cm von der Mitteleben beabstandet; und/oder
- zweite Lochschiene: Montagelinie ca. 117 cm von der Mittelebene beabstandet; und/oder
- dritte Lochschiene: Montagelinie ca. 131 cm von der Mittelebene beabstandet; und/oder
- vierte Lochschiene: Montagelinie ca. 247 cm von der Mittelebene beabstandet.

Die genannte Positionierung der Lochschienen ist besonders vorteilhaft, wenn zusätzlich zu den Lochschienen Rollenbahnen vorgesehen sind, die fest mit der Tragstruktur des Flugzeugs, insbesondere den Querträgern verbunden, insbesondere verschraubt, sind.

In einer Ausführungsform bei der keine oder nur sehr wenig festinstallierte Rollenbahnen vorgesehen sind, werden die Lochschienen in Bezug auf die Mittelebenen wie folgt angeordnet:
- Erste Lochschiene: ca. 15-32 cm, insbesondere ca. 18-30 cm, z.B. auf 21 cm oder 23 cm; und/oder
- Zweite Lochschiene: ca. 67-90 cm, insbesondere ca. 69-76 cm, z.B. auf 72 cm; und/oder
- Dritte Lochschiene: ca. 120-130 cm, insbesondere ca. 120-126,5 cm, z.B. auf 120 cm oder 123 cm; und/oder;
- Vierte Lochschiene: ca. 170-180 cm, insbesondere ca. 171-178 cm, z.B. auf 173,5 cm; und/oder
- Fünfte Lochschiene: ca. 220-230 cm, insbesondere ca. 221-228 cm, z.B. auf 224 cm; und/oder
- Sechste Lochschiene: ca. 245-260 cm, insbesondere ca. 247-259 cm, z.B. auf 224 cm; und/oder
- Siebte Lochschiene: ca. 255-275 cm, insbesondere ca. 260-275 cm, z.B. auf 274 cm oder 275 cm.

Auf einigen dieser Lochschienen können dann abnehmbare Rollenbahnen befestigt werden. Ein einer Ausführungsform sind zumindest in einem Segment die erste bis die sechste Lochschiene an den vorgenannten Positionen angeordnet.

In einer Ausführungsform ist in einem Segment des Frachtdecks zumindest ein Paar einer zweiten und ein Paar einer dritten Lochschiene an den oben angegebenen Positionen vorgesehen. Wie bereits erläutert, ermöglichen die dort positionierten Lochschienen ein besonders gutes Absichern der ULDs in X-Richtung des Flugzeugs. Zusätzlich kann ein Paar der ersten Lochschienen in dem besagten Segment an den vorgegebenen Positionen angeordnet sein. In einer bevorzugten Ausführungsform sind alle der genannten Lochschienen, nämlich die erste bis vierte Lochschiene bzw. die erste bis siebte Lochschiene (keine festmontierten Rollenbahnen) in mindestens einem Segment des Flugzeugs an den oben beschriebenen Positionen angeordnet, um ein optimales Frachtdeck zu erreichen.

In einer Ausführungsform sind Rollenbahnen vorgesehen, die die Struktur des Frachtdecks weiter verstärken und neben den Rollen zur einfachen Förderung der ULDs weitere Funktionseinheiten aufnehmen können.

Das Frachtdeck kann die nachfolgenden Rollenbahnen umfassen:
- mindestens eine (erste) Rollenbahn, die vorzugsweise parallel zur Mittelebene in einem Bereich zwischen 44 und 57 cm, insbesondere zwischen 48 und 55 cm von der Mittelebene beabstandet angeordnet ist; und/oder
- mindestens eine (zweite) Rollenbahn, die vorzugsweise parallel zur Mittelebene in einem Bereich zwischen 95 und 110 cm, insbesondere zwischen 98 und 105 cm von der Mittelebene beabstandet angeordnet ist; und/oder
- mindestens eine (dritte) Rollenbahn, die vorzugsweise parallel zur Mittelebene in einem Bereich zwischen 145 und 160 cm, insbesondere zwischen 150 und 156 cm von der Mittelebene beabstandet angeordnet ist; und/oder
- mindestens eine (vierte) Rollenbahn, die vorzugsweise parallel zur Mittelebene in einem Bereich zwischen 200 und 210 cm, insbesondere zwischen 200 und 208 cm von der Mittelebene beabstandet angeordnet ist.

In einer Ausführungsform befinden sich zumindest die U-Profile, die die Rollen der Rollenbahnen tragen, in den oben angegebenen Bereichen. Auch in Bezug auf die Rollenbahnen können Montagelinien definiert werden, wobei sich zumindest diese Montagelinien innerhalb der oben angegebenen Bereiche befinden. Eine Montagelinie bzw. Montageebene einer Rollenbahn kann so definiert werden, dass sie mittig zwischen den Seitenwänden des U-Profils der Rollenbahn verläuft.

In einer Ausführungsform sind die Rollenbahnen zumindest in einem Segment des Frachtdecks wie folgt positioniert:
- erste Rollenbahn: Montagelinie ca. 50 oder 51 cm von der Mittelebene beabstandet; und/oder
- zweite Rollenbahn: Montagelinie ca. 102 cm von der Mittelebene beabstandet; und/oder
- dritte Rollenbahn: Montagelinie ca. 153 cm von der Mittelebene beabstandet; und/oder
- vierte Rollenbahn: Montagelinie ca. 204 bis 205 cm von der Mittelebene beabstandet.

In einer Ausführungsform sind die Rollenbahnen fest an Querträgern befestigt, insbesondere mit diesen vernietet und/oder verschraubt.

In einer Ausführungsform umfasst zumindest ein Segment des Frachtdecks genau acht Rollenbahnen. Vorzugsweise befinden sich diese acht Rollenbahnen allesamt an den oben angegebenen Positionen. Hierbei können jeweils Paare von ersten bzw. zweiten bzw. dritten bzw. vierten Rollenbahnen vorgesehen sein, um die acht Rollenbahnen bereitzustellen.

In einer (weiteren) Ausführungsform sind in einem oder in dem Segment genau acht Lochschienen an den eingangs beschriebenen Positionen der Lochschienen vorgesehen. Auch hier können die Lochschienen in Paaren als erste, zweite, dritte und vierte Lochschienen-Paare vorgesehen sein. Alternativ können in der Ausführungsform ohne feste Rollenbahnen genau 12 (alternative Seitenführung) oder genau 14 Lochschienen in mindestens einem Segment vorgesehen sein. Die Lochschienen übernehmen dann die versteifende Funktion, die zumindest teilweise von den festen Rollenbahnen gewährleistet wird.

In einer weiteren Ausführungsform ist in dem Segment entlang der Mittelebene eine weitere Lochschiene angeordnet, so dass sich insgesamt exakt neun bzw. exakt 15 Lochschienen ergeben.

Die besagten Konfigurationen können, wie bereits erläutert, in einem oder in mehreren Segmenten des Frachtdecks vorgesehen sein.

In einer Ausführungsform sind zusätzlich Fittingelemente an vorgegebenen Positionen bzw. in vorgegebenen Bereichen vorgesehen. Erfindungsgemäß sind Fittingelemente dazu ausgebildet (unmittelbar) mit Querträgern des Flugzeugs verbunden zu werden. Fittingelemente können Aufnahmebereiche aufweisen, um Funktionselemente auf dem Frachtdeck zu befestigen. Vorzugsweise sind die Fittingelemente derart ausgestaltet, dass über die Funktionseinheiten aufgebrachte Lasten unmittelbar in die Struktur des Flugzeugs abgeleitet werden.

In einer Ausführungsform können die Aufnahmebereiche Lochschienenkulissen sein, wie diese in Verbindung mit Loch- oder Sitzschienen bekannt sind. Ein entsprechendes Fittingelement weist dann mindestens zwei, vorzugsweise mindestens drei Löcher einer entsprechenden Lochschienenkulisse auf. In einer Ausführungsform ist die Länge einer Lochschienenkulisse eines entsprechenden Fittingelements auf maximal 20, insbesondere auf maximal 15 Löcher begrenzt.

Das Frachtdeck kann die nachfolgenden Fittingelemente umfassen:
- mindestens ein (erstes) Fittingelement, das in einem Abstand von zwischen 155 und 165 cm, insbesondere zwischen 157 und 163 cm von der Mittelebene entfernt montiert ist; und/oder
- mindestens ein (zweites) Fittingelement, das, vorzugsweise unmittelbar benachbart zum ersten Fittingelement, in einem Abstand von zwischen 163 und 175 cm, insbesondere zwischen 165 und 170 cm von der Mittelebene entfernt montiert ist; und/oder
- mindestens ein (drittes) Fittingelement, das in einem Abstand von zwischen 225 und 240 cm, insbesondere zwischen 228 und 236 cm von der Mittelebene entfernt montiert ist; und/oder
- mindestens ein (viertes) Fittingelement, das in einem Abstand von zwischen 260 und 280 cm, insbesondere zwischen 265 und 276 cm von der Mittelebene entfernt montiert ist.

Die Fittingelemente werden, wie bereits beschrieben, genutzt, um Funktionseinheiten am Frachtdeck zu befestigen. Im Vergleich zu Lochschienen weisen sie ein deutlich geringeres Gewicht auf, so dass durch die Verwendung der Fittingelemente, insbesondere an den oben beschriebenen Positionen, das Gewicht des Frachtdecks weiter reduziert werden kann. Gegenüber den Rollenbahnen und den Lochschienen haben die Fittingelemente jedoch den Nachteil, dass sie die Struktur des Frachtdecks nicht versteifen. Insofern wird erfindungsgemäß eine Konfiguration vorgesehen, bei der die Anforderung an Steifigkeit und Gewicht optimiert ist.

Entsprechend der Definition für die Lochschienen können auch bei den Fittingelementen Montagelinien bzw. eine Montageebene definiert werden. Die oben bezeichneten Bereichs- bzw. Positionsangaben können derart verstanden werden, dass sich zumindest die Montagelinie der Fittingelemente in den besagten Bereichen bzw. an den besagten Positionen befindet.

In einer Ausführungsform befindet sich:
- eine Montagelinie des mindestens einen ersten Fittingelements ca. 161 cm von der Mittelebene; und/oder
- eine Montagelinie des mindestens einen zweiten Fittingelements 168 cm von der Mittelebene; und/oder
- eine Montagelinie des mindestens einen dritten Fittingelements 234 cm von der Mittelebene; und/oder
- eine Montagelinie des mindestens einen vierten Fittingelements ca. 275 cm von der Mittelebene
beabstandet.

In einer Ausführungsform ist ein Paar von Fittingelementen wechselseitig zu einer Lochschiene angeordnet. Bei diesem Paar von Fittingelementen kann es sich um das dritte und das vierte Fittingelement handeln. Das dritte und das vierte Fittingelement können also eine Lochschiene flankieren. Bei dieser Lochschiene kann es sich um die vierte Lochschiene handeln. Allgemein ist diese Anordnung an den Seitenrändern nahe der Außenhaut des Flugzeugs bevorzugt. An diesen Stellen werden Seitenführungen angeordnet. Die besondere Konstellation, die letztendlich drei Befestigungspunkte bzw -bereiche, beispielsweise in Form von Lochschienenkulissen, bereitstellt, eignet sich um derartige Seitenführungen anzubringen. Bei früheren Systemen wurden hier üblicherweise mindestens zwei Lochschienen vorgesehen. Durch die erfindungsgemäße Ausgestaltung kann auf das zusätzliche Gewicht einer weiteren Lochschiene verzichtet werden. In einer Ausführungsform umfasst die Seitenführung eine Führungsschiene, die mehrere Rahmen, die in den Befestigungspunkten befestigt sind, miteinander verbindet. Insofern versteift die Seitenführungsschiene zusammen mit der Lochschiene das Frachtdeck. Nicht zuletzt deshalb kann auf die Anordnung einer weiteren Lochschiene verzichtet werden.

In einer Ausführungsform können zumindest in mindestens einem Segment jeweils Paare von ersten bzw. zweiten bzw. dritten bzw. vierten Rollenbahnen symmetrisch zur Mittelebene angeordnet sein. Das heißt beispielsweise, dass eine backbordseitige erste Rollenbahn symmetrisch zu einer rechtsseitigen ersten Rollenbahn angeordnet ist. Die Mittelebene bildet die Spiegelebene. Entsprechendes kann für die verbleibenden Paare von Rollenbahnen gelten. Auch die Lochschienen können paarweise symmetrisch angeordnet sein. Eine entsprechende symmetrische Anordnung kann in mindestens einem Segment oder auch über weite Abschnitte des Frachtdecks vorgesehen sein.

In einer Ausführungsform sind zumindest einige der Fittingelemente paarweise symmetrisch zur Mittelebene angeordnet. Hierbei kann es sich um ein Paar der ersten Fittingelemente und/oder ein Paar der zweiten Fittingelemente, und/oder ein Paar der dritten Fittingelemente und/oder ein Paar der vierten Fittingelemente handeln.

Das Frachtdeck umfasst einen ersten und einen zweiten Mittelführungsriegel, die dazu eingerichtet sind, zwei im Wesentlichen parallel zueinander verlaufende Befestigungsbahnen (jede Bahn enthält eine Reihe von gleichartigen ULDs) in zumindest einem Segment des Frachtdecks anzubieten. Die Mittelführungsriegel sind mit mindestens einer Seiten-Führungskralle ausgestattet, und sind abwechselnd so quer - entlang der Y-Richtung - am Frachtdeck angeordnet, dass Anschlagflächen der Seiten-Führungskrallen in entgegengesetzte Richtungen zeigen. Entsprechende Mittelführungsriegel sind üblicherweise entlang der Mittelebene angeordnet.

In einer (weiteren) Ausführungsform sind mindestens ein erster und ein zweiter Mittelführungsriegel derart angeordnet, dass eine/die Anschlagsfläche des ersten Mittelführungsriegels in eine entgegengesetzte Richtung als eine/die Anschlagsfläche des zweiten Mitteführungsriegels zeigt bzw. ausgerichtet ist, wobei eine erste von der der Anschlagsfläche des ersten Mittelführungsriegel aufgespannte Ebene zu einer zweiten von der Anschlagsfläche des zweiten Mittelführungsriegels aufgespannten Ebene zwischen 2,5 cm (1 Zoll) und 10 cm (4 Zoll) voneinander beabstandet sind. Somit lassen sich backbord- (z.B. entlang der ersten Ebene) und steuerbordseitig (z.B. entlang der zweiten Ebene) Begrenzungen für Förderbahnen schaffen, die backbord- und steuerbordseitig der angeordneten Mittelführungsriegel verlaufen. Der Abstand dieser Begrenzungen kann auf Grund der abwechselnden Anordnung der Mittelführungsriegel sehr gering gehalten werden, so dass eine optimale Ausnutzung des Frachtdecks erzielt werden kann. Insbesondere kann durch diesen Ansatz Platz eingespart werden, um Seitengänge für das Ladepersonal vorzusehen und/oder besonders günstige Ladekonfigurationen zu ermöglichen.

Der Abstand zwischen der ersten und der zweiten Ebene kann ca. 3 cm (1 ¾ Zoll) oder ca. 9 cm (3,6 Zoll) betragen.

In einer Ausführungsform weisen die Anschlagsflächen Riegelnasen und/oder Sicherungsplatten bzw. Sicherungskrallen (sogenannte "Blades") auf, die über die Anschlagsfläche (in Y Richtung) hinausragen. Bei der erläuterten entgegengesetzten Anordnung zeigen dies Überstände in entgegengesetzte Richtungen.

In einer Ausführungsform sind die Anschlagsflächen ggf. mit Überständen (gemeinsam als Riegelkrallen bezeichnet) derart abklappbar, dass diese in einem abgeklappten Zustand in einem Bereich außerhalb des Rahmens (vor oder hinter dem Rahmen) zu liegen kommen. Vorzugsweise sind der erste und der zweite Mittelriegel derart angeordnet, dass die (im Wesentlichen) gleichen Riegelkrallen in entgegengesetzte Richtungen abklappen.

In einer (weiteren) Ausführungsform ist/sind mindestens eine, vorzugsweise beide Riegelkrallen mit den die erste und zweite Ebene aufspannenden Anschlagflächen entlang der Längsrichtung des Rahmens des jeweiligen Mittelriegels verschiebbar angeordnet. Die jeweilige Riegelkralle kann beispielsweise um bis zu 5 cm (ca. zwei Zoll) verschiebbar angeordnet sein. In einer Ausführungsform ist somit eine Beabstandung von ca. 2,5 cm und von ca. 9 cm einstellbar (entspricht einer jeweiligen Verschiebung von ca. 3,25 cm), wobei vorzugsweise ein Festsetzen der Riegelkrallen an der jeweiligen Position erfolgen kann. Somit lassen sich zusätzliche vorteilhafte Ladekonfigurationen bereitstellen. Die Verschiebbarkeit kann beispielsweise durch ein Vorsehen eines Schlittens erreicht werden, wobei die jeweilige Riegelkralle an dem Schlitten angeordnet ist und der Schlitten am Rahmen an unterschiedlichen Positionen festsetzbar ist.

Erfindungsgemäß können vorteilhafte Frachtdeck-Konfigurationen erreicht werden, wenn (ähnliche oder identische) Mittelführungsriegel aufeinanderfolgend in gegensätzlicher Anordnung bereitgestellt werden.

Diese besondere Form der Anordnung hat zum einen den Vorteil, dass von dem Mittelführungsriegel, insbesondere von den Seiten-Führungskrallen, Führungsebenen aufgespannt werden können, die sehr nahe aneinander liegen. Beispielsweise ist es möglich, die Seiten-Führungskralle relativ robust auszubilden und gleichzeitig einen Abstand von weniger als 5 cm, insbesondere von weniger als 4 cm, beispielsweise von 1 Zoll, zu erreichen. Somit können die ULDs extrem nahe beieinander (betrachtet in Y-Richtung) beladen werden.

In einer Ausführungsform können die Mittelführungsriegel an ihren Enden sich unterscheidende Krallen bzw. Arme aufweisen. Durch die abwechselnde Ausrichtung können somit unterschiedliche Funktionen in beiden Befestigungsbahnen bereitgestellt werden.

Die vorab genannten Mittelführungsriegel sind asymmetrisch ausgebildet (an einer Querebene quer zur Längsrichtung des Rahmens). Die Mittelführungsriegel weisen einen Rahmen auf, wobei sich dieser Rahmen in Längsrichtung erstreckt. An einem Ende dieses Rahmens kann ein nach vorne wegklappbarer Führungsriegel angeordnet sein. Das Wegklappen eines Führungsriegels nach vorne hat den Vorteil, dass erhebliche Bestandteile der Führungskralle beim Abklappen in einem Bereich zu liegen kommen, der außerhalb des Rahmens liegt, so dass diese Teile entsprechend voluminöser dimensioniert werden können. Beispielsweise können größere Anschlagsflächen vorgesehen sein, die sich quer zur Längsrichtung des Rahmens erstrecken und wechselseitig über diesen hinausragen. In einer Ausführungsform sind an beiden Enden der Rahmen unterschiedliche Krallen vorgesehen. Beispielsweise kann sich an dem einen Ende des Rahmens eine Seiten-Führungskralle und an dem anderen Ende des Rahmens eine Sicherungskralle befinden. Erfindungsgemäß kann eine der beiden Krallen oder beiden Krallen abklappbar sein. In einem bevorzugten Ausführungsbeispiel sind beide Krallen aus einer Arbeitsposition in eine Ruheposition abklappbar. Die Abklappmechanismen können sich in einer Ausführungsform darin unterscheiden, dass eine der Krallen, beispielsweise die Seitenführungskralle, in der Ruheposition zumindest teilweise, wie bereits erläutert, außerhalb des Rahmens und die andere Kralle, beispielsweise die Sicherungskralle in der Ruheposition in einem Bereich innerhalb des Rahmens (zumindest teilweise) zu liegen kommt. In einer Ausführungsform rotieren die beiden unterschiedlichen Riegelkrallen zum Erreichen der Ruheposition jeweils um eine gesonderte Rotationsachse. Der Abschwenkmechanismus aus der Arbeitsposition in die Ruheposition kann sich hierbei dadurch unterscheiden, dass bei einer Betrachtung aus derselben Richtung einmal eine Rotation im Uhrzeigersinn und einmal eine Rotation gegen den Uhrzeigersinn erfolgt.

In einer (weiteren) Ausführungsform unterscheiden sich die Riegelkrallen anhand ihrer konkreten Ausgestaltung. So kann die Sicherungskralle ein L-Profil aufweisen, das so dimensioniert ist, dass es eine Breite hat, die geringer ist als die lichte Weite des Rahmenabschnitts, in dem die Sicherungskralle in der Ruheposition zu liegen kommt. Die Seitenführungskralle kann eine sogenannte Z-Nase aufweisen, die derart rotationsbeweglich an der Anschlagfläche gelagert ist, dass sie bei vorbeifahrenden Frachtstücken aus ihrer Ausgangsposition in eine Position wegklappt, die es ermöglicht, dass die Frachtstücke seitlich entlang der Anschlagfläche geführt werden können.

In einer Ausführungsform sind die vorab beschriebenen Mittelführungsriegel entweder in dem bereits erläuterten Paar von ersten Lochschienen oder in einer ersten Lochschiene und einer entlang der Mittelebene verlaufenden weiteren Lochschiene verankert.

Für das Anbieten der unterschiedlichen Funktionen kann beispielsweise an einem Ende des Mittelführungsriegels eine Sicherungskralle vorgesehen sein, die besonders dazu geeignet ist, geladene Paletten derart zu verriegeln, dass Lasten in X-Richtung ("forward", "aft") aufgenommen werden können. In einer Ausführungsform kommt die bereits beschriebene Seiten-Führungskralle an dem gegenüberliegenden Ende hinzu. Vorzugweise ist zumindest die Sicherungskralle derart abklappbar ausgebildet, dass sie aus einer Ruhestellung in eine Haltestellung zur Fixierung der Paletten gebracht werden kann. In Kombination mit der beschriebenen Seiten-Führungskralle ist es möglich, Fracht in zwei parallel nebeneinander verlaufenden Ladebahnen bzw. Befestigungsbahnen einzubringen, wobei zunächst eine Führung der Fracht entlang der Anschlagflächen der wechselseitig ausgerichteten Seiten-Führungskrallen erfolgt. Wenn die Paletten ihre Endposition erreichen, können die Sicherungskrallen hochgeklappt werden, so dass sie die Paletten in X-Richtung verriegeln.

In einer Ausführungsform sind die Mittelführungsriegel mindestens in einem Segment derart ausgebildet und angeordnet oder anordenbar, dass Anschlagflächen der Seiten-Führungskrallen in einer Konfiguration und/oder Anordnung einen Mittelgang begrenzen. Das heißt, die Mittelführungsriegel können derart angeordnet oder ausgebildet sein, dass sich zwischen den Ladebahnen ein Mittelgang ausbildet. Vorzugsweise ist dieser Mittelgang derart ausgestaltet, dass sich in ihm Ladepersonal bewegen kann. In Verbindung mit den vorab bereits beschriebenen aufklappbaren Sicherungskrallen ergibt sich somit die Möglichkeit, die Fracht zunächst zu verladen und dann die einzelnen Mittelführungsriegel über den Mittelgang zu erreichen, so dass die ULDs in einem zweiten Schritt gesichert werden können. Im Vergleich zu herkömmlichen Frachtladesystemen, bei denen derartige Gänge stets an den Seitenbereichen vorgesehen sind, ergibt sich eine Platzersparnis sowie ein wesentlich komfortablerer zu begehender Mittelgang. Weiterhin kann die Beladezeit reduziert werden, da sich die ULDs wechselseitig aus einem Gang, nämlich dem Mittelgang heraus absichern lassen und nicht zwei im Außenbereich angeordnete Gänge gesondert abgegangen werden müssen.

Die Anschlagflächen der Seiten-Führungskrallen können in dieser Konfiguration bzw. Anordnung mindestens 15 cm, insbesondere mindestens 20 cm, vorzugsweise ca. 21 cm von der Mittelebene beabstandet sein. Geht man von einer Ausführungsform aus, bei der die Mittelführungsriegel in abwechselnder Ausrichtung angeordnet sind, ergibt sich somit ein Mittelgang von mindestens 30 bzw. mindestens 40 bzw. mindestens 42 cm. Der Mittelgang lässt sich also komfortabel begehen.

In einer Ausführungsform umfasst mindestens einer der Mittelführungsriegel eine abklappbare Mittel-Führungskralle mit zwei wechselseitigen Anschlagflächen. Es kann also neben der Seiten-Führungskralle eine Mittel-Führungskralle vorgesehen sein, die sich beispielsweise im Bereich der Mittelebene befindet. Diese Mittel-Führungskralle kann in einer Konfiguration zwei Frachtförderbahnen begrenzen. Weiterhin können an den Enden jeweils eine Seiten-Führungskralle sowie eine Sicherungskralle vorgesehen sein. Die Seiten-Führungskralle und die Sicherungskralle können Anschlagflächen haben, die in einem aufgestellten Zustand der Krallen deutlich, beispielsweise mindestens 30 cm voneinander beabstandet sind. Die Anschlagflächen weisen zumindest in einer Ausführungsform in entgegengesetzte Richtungen, so dass sie an ULDs in einer steuerbordseitigen sowie in einer backbordseitigen Förderbahn anschlagen können.

Die eingangs genannte Aufgabe wird weiterhin durch ein Flugzeug mit einem Frachtdeck gelöst, wobei es sich bei dem Frachtdeck um eine Ausführungsform handelt, wie diese bereits vorab beschrieben wurde.

Der Mittelführungsriegel des Frachtdecks kann einige oder alle der bereits in Verbindung mit verschiedenen Ausführungsformen des Mittelführungsriegels beschriebenen Merkmale aufweisen.

In einer Ausführungsform umfasst der Mittelführungsriegel:
- eine/die insbesondere abklappbar im Rahmen gelagerte Sicherungskralle;
- die insbesondere abklappbar im Rahmen gelagerte Seiten-Sicherungskralle;
wobei die Anschlagflächen der Seiten-Führungskralle in einer aufgestellten Position mindestens 30 cm, insbesondere mindestens 40 cm, vorzugsweise ca. 43 cm voneinander beabstandet sind und in entgegengesetzte Richtungen ausgerichtet sind.

Wie bereits erläutert, kann der Mittelführungsriegel dazu eingesetzt werden, um parallel laufende Förderbahnen zu begrenzen. Weiterhin kann dieser genutzt werden, um eine Vielzahl von unterschiedlichen Frachtladekonfigurationen zu ermöglichen. Letztendlich kann der Mittelführungsriegel weiterhin den bereits erläuterten (großzügigen) Mittelgang anbieten, um ein effektives Be- und Entladen, insbesondere Sichern der Ladung, zu gewährleisten.

In einer Ausführungsform umfasst der Mittelführungsriegel eine abklappbar im Rahmen gelagerte Mittel-Führungskralle mit einer ersten Anschlagfläche und einer zweiten Anschlagfläche, die in entgegengesetzte Richtungen ausgerichtet sind. Vorzugsweise sind die Anschlagflächen der Führungskralle mindestens 1 cm, insbesondere mindestens 2 cm, beispielsweise ca. 2,5 cm voneinander beanstandet. In einer Ausführungsform sind diese Anschlagflächen der Mittel-Führungskralle nicht weiter als 10 cm, insbesondere nicht weiter als 5 cm voneinander beabstandet.

In einer Ausführungsform ist die Mittel-Führungskralle mittig innerhalb des Rahmens angeordnet.

Durch die Verwendung von unterschiedlichen Krallen, nämlich der Sicherungskralle und der Seitenführungskralle ist der Mittelführungsriegel als solches asymmetrisch ausgebildet. In einer Ausführungsform befindet sich die Sicherungskralle an dem einen Ende des Rahmens und die Führungskralle an dem anderen Ende des Rahmens. Wie bereits vorab erläutert, können sich die Sicherungskralle und die Führungskralle anhand ihrer konkreten Ausgestaltung und Funktion unterscheiden. So kann sowohl die Sicherungskralle als auch die Führungskralle aus einer Arbeitsposition in eine Ruheposition abklappbar sein. Wie bereits erläutert, kann sich die Sicherungskralle in ihrer Ruheposition im Wesentlichen innerhalb des Rahmens befinden, wobei die Führungskralle in ihrer Ruheposition zumindest teilweise in einem Bereich liegt, der außerhalb des Rahmens ist. Wie bereits erläutert, können sich die Rotationsrichtungen der Krallen zum Erreichen der Ruheposition ausgehend von der Arbeitsposition unterscheiden. Die Sicherungskralle kann das bereits erläuterte L-Profil und die Seiten-Führungskralle die bereits erläuterte Z-Nase aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Flugzeug und der erfindungsgemäße Frachtcontainer ausgestaltet sein können.

In diesen zeigen,
- Fig. 1: eine schematische Darstellung eines Flugzeugs;
- Fig. 2: einen Schnitt durch das Flugzeug aus Fig. 1 mit dem erfindungsgemäßen Frachtdeck;
- Fig. 3: eine schematische Teilansicht der Fig. 2;
- Fig. 4: eine perspektivische Draufsicht auf eine erste Konfiguration eines erfindungsgemäßen Frachtdecks, umfassend Lochschienen, Rollenbahnen, Fittingelemente sowie diverse auf dem Frachtdeck angeordnete Funktionseinheiten;
- Fig. 5: eine Seitenansicht einer Lochschiene;
- Fig. 6: eine perspektivische Ansicht einer Lochschiene;
- Fig. 7: eine Seitenansicht einer Profilschiene einer Rollenbahn;
- Fig. 8: eine Seitenansicht eines montierten Mittelführungsriegels (Riegelklauen hochgeklappt);
- Fig. 9: eine weitere Seitenansicht des Mittelführungsriegels gemäß Fig. 8 mit heruntergeklappten Riegelkrallen;
- Fig. 10: eine perspektivische Ansicht von in unterschiedlichen Richtungen ausgerichteten Mittelführungsriegeln;
- Fig. 11: eine Draufsicht auf die Anordnung gemäß Fig. 10;
- Fig. 12: eine Draufsicht auf einen Teilabschnitt eines weiteren Ausführungsbeispiels eines erfindungsgemäßen Frachtdecks mit alternativen Mittelführungsriegeln;
- Fig. 13: einen Schnitt durch die Anordnung gemäß Fig. 12;
- Fig. 14: eine Detailansicht des Mittelführungsriegels gemäß Fig. 12 (Riegelkralle hochgeklappt);
- Fig. 15: der Mittelführungsriegel aus Fig. 14 mit heruntergeklappter Riegelkralle;
- Fig. 16: ein weiteres Ausführungsbeispiel eines erfindungsgemäßen Frachtdecks; und
- Fig. 17: exemplarische Ladekonfigurationen für ein erfindungsgemäßes Frachtdeck.

In der nachfolgenden Beschreibung werden für gleiche und gleich wirkende Teile dieselben Bezugsziffern verwendet.

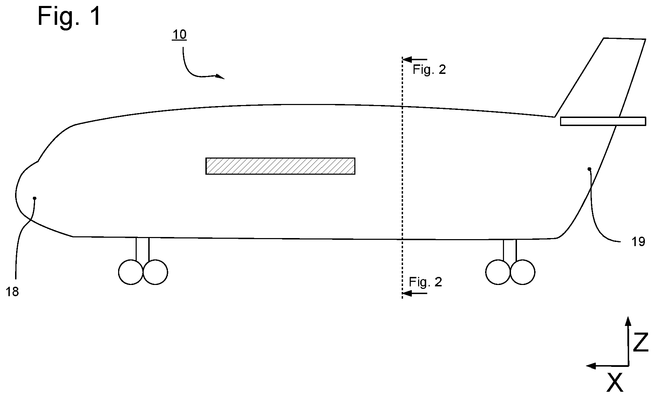

Fig. 1 zeigt ein Flugzeug 10 in einer Seitenansicht. Das Flugzeug bzw. dessen Rumpf 11 erstreckt sich in Längsrichtung vom Bug 18 zum Heck 19. In der nachfolgenden Beschreibung wird diese Längsrichtung als X-Richtung bezeichnet. Die vertikal verlaufende Richtung wird als Z-Richtung bezeichnet und die auf dem jeweiligen Richtungsvektor senkrecht stehende Richtung als Y-Richtung.

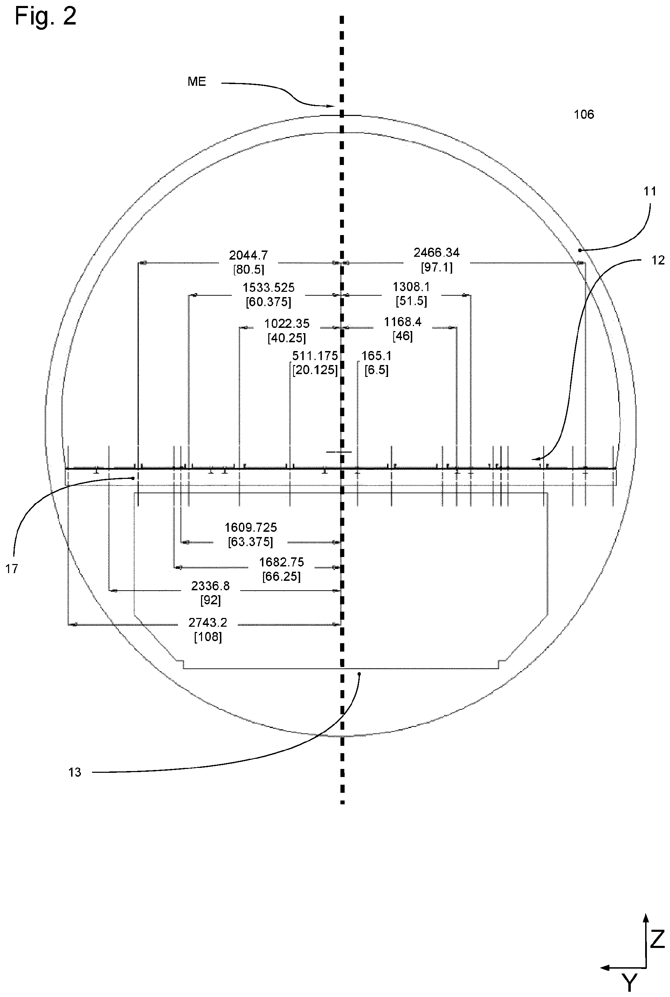

Fig. 2 zeigt einen Schnitt durch das Flugzeug 10 gemäß Fig. 1. Bei dem Schnitt handelt es sich um einen Querschnitt entlang einer Ebene, die durch die Z- und die Y-Richtung bestimmt ist.

Da es sich bei dem Flugzeug 10 um ein Frachtflugzeug, z.B. die A350F, handelt, zeigt der Schnitt zwei Frachträume; einen oberen Frachtraum, der durch das obere Deck 12 nach unten hin begrenzt wird (im Weiteren Frachtdeck 12) und ein unteres Deck 13. Das Frachtdeck 12 ruht auf mehreren Querträgern 17, wobei einer dieser Querträger schematisch in der Fig. 2 dargestellt ist. Das Frachtdeck 12 hat in diesem Ausführungsbeispiel die Abmessungen des Hauptdecks ("Main Deck") einer A350.

Auf dem Frachtdeck 12 sind symmetrisch in vorgegebenen Abständen Lochschienen 20, Rollenbahnen 30 und Fittingelemente 40 angeordnet. Eine entlang der Längsrichtung (X-Richtung) und Z-Richtung verlaufende Ebene, nämlich die Mittelebene ME bildet die Symmetrieebene für die Anordnung der besagten Komponenten.

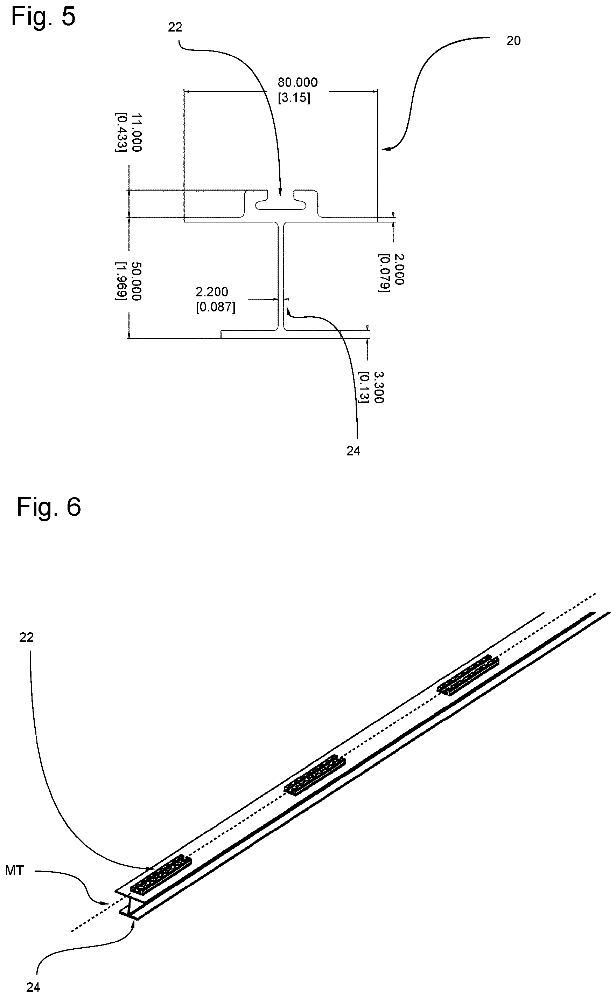

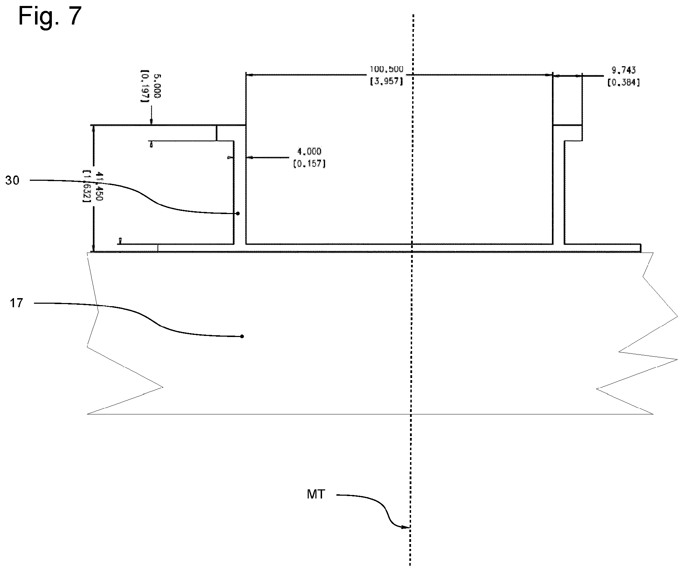

Auch die Positionsangaben der einzelnen Lochschienen 20, Rollenbahnen 30 und Fittingelemente 40 sind ausgehend von dieser Mittelebene ME angegeben. Die Abstände beziehen sich auf eine Montagelinie bzw. Montageebene MT, die nachfolgend noch erläutert wird (vgl. beispielsweise Fig. 6 und Fig. 7).

Bei einer bevorzugten Konfiguration sind die Lochschienen 20 an den Positionen angeordnet, die durch die Bemaßung im oberen rechten Quadranten der Fig. 2 vorgegeben sind. Die dort genannte Zahl gibt hierbei Millimeterwerte an, wobei in eckigen Klammern darunter Inch-Werte vorgegeben sind.

Die Bemaßungen im linken oberen Quadranten der Fig. 2 geben Abstände der Rollenbahnen 30 zur Mittelebene ME vor. Insgesamt sind in der gezeigten erfindungsgemäßen Konfiguration vier Rollenbahnen vorgesehen.

Die Bemaßung im unteren linken Quadranten gibt die Abstände zwischen Montagelinie MT der Fittingelemente 40 und der Mittelebene ME vor.

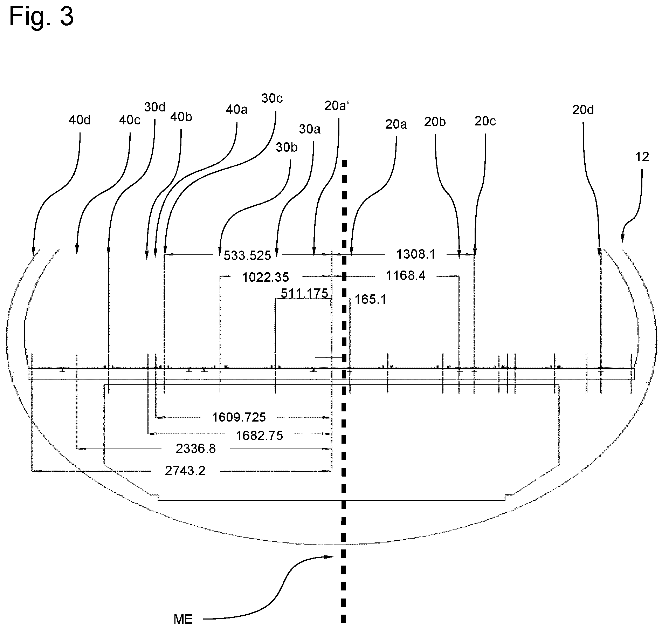

Fig. 3 verdeutlicht die konkrete Konfiguration. Ein Kern der Erfindung besteht darin, dass anhand der sehr geringen Anzahl von Lochschienen 20 und Rollenbahnen 30 ein in sich steifes Frachtdeck 12 geschaffen wird, auf dem äußerst funktional ULDs angeordnet werden können.

Hierfür sind backbordseitig und steuerbordseitig der Mittelebene ME genau vier Rollenbahnen 30, nämlich die erste Rollenbahn 30a, die zweite Rollenbahn 30b, die dritte Rollenbahn 30c und die vierte Rollenbahn 30d vorgesehen. Ebenso sind jeweils backbordseitig und steuerbordseitig vier Lochschienen 20 in Reihenanordnung vorgesehen. Hierbei handelt es sich um eine erste Lochschiene 20a, eine zweite Lochschiene 20b, eine dritte Lochschiene 20c, die nahe bei der zweiten Lochschiene 20b angeordnet ist, sowie eine außenseitige vierte Lochschiene 20d.

Weiterhin sind auf gedachten Linien entlang der Längsrichtung (X-Richtung) des Flugzeugs Fittingelemente 40 vorgesehen. In der in Fig. 3 gezeigten Ausführungsform ergeben sich auf jeder Seite jeweils vier derartige Linien mit Fittingelementen 40. Hierbei handelt es sich um ein erstes Fittingelement 40a, ein nahe daneben angeordnetes zweites Fittingelement 40b, ein drittes Fittingelement 40c und ein viertes Fittingelement 40d.

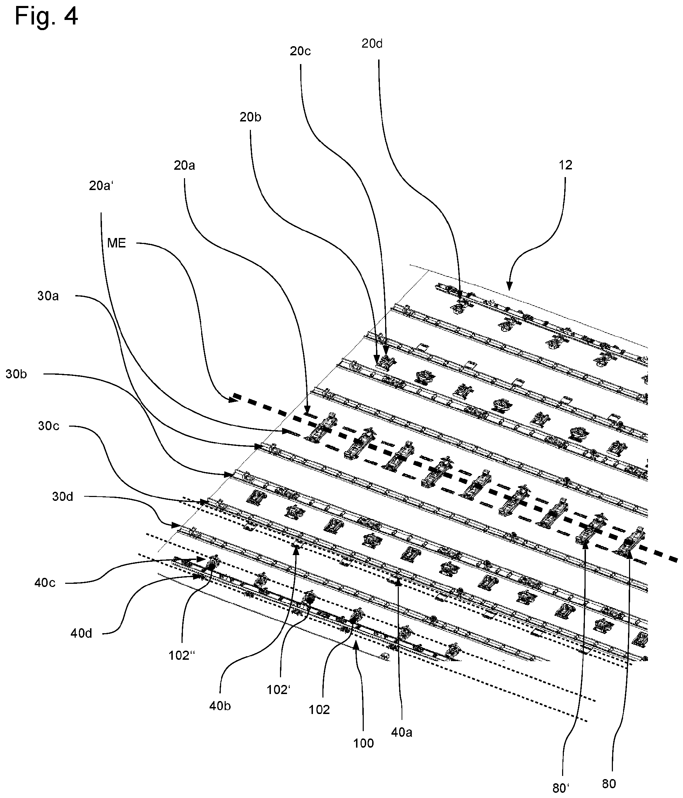

Die Fig. 4 zeigt eine perspektivische Sicht des erfindungsgemäßen Frachtdecks 12. Bei dieser Ansicht lassen sich die die Struktur verstärkenden Rollenbahnen 30a, 30b, 30c, 30d gut erkennen. Diese Rollenbahnen sind wie bereits erläutert, symmetrisch zur Mittelebene angeordnet. Sie beinhalten neben den Rollen, Rollenantriebseinheiten, sogenannte PDUs, sowie X-Riegel. Derartige X-Riegel sichern die Fracht in X-Richtung ab. Die Anordnung derartiger Riegel innerhalb der Rollenbahnen 30a, 30b, 30c und 30d ist bevorzugt, da hierdurch die auftretenden Kräfte über die Profile der Rollenbahnen auf die Struktur verteilt werden.

Unmittelbar neben der Mittelebene ME befinden sich auf jeder Seite des Frachtdecks 12 die ersten Lochschienen 20a bzw. 20a'. Hierbei handelt es sich wie aus Fig. 6 ersichtlich, um eine Profilschiene 24 in Form eines I-Profils, auf deren Oberseite Lochschienenkulissen 22 voneinander beabstandet vorgesehen sind. Die Fig. 6 zeigt ebenfalls mittels einer gestrichelten Linie die Montagelinie MT einer entsprechenden Lochschiene 20. Diese Montagelinie verläuft im Endeffekt mittig zwischen den Lochschienenkulissen 22. In den gezeigten Ausführungsbeispielen sind die Lochschienenkulissen in regelmäßigen Abständen vorzugsweise derart angeordnet, dass der Anfang einer ersten Lochschienenkulisse 22 von dem Anfang einer zweiten Lochschienenkulisse 22 ca. 63 cm entfernt ist (Kulissenabstand). Entsprechende Abstände können beispielsweise für die Lockschienenkulissen der zweiten und dritten Lochschienen 20b, 20c vorgesehen sein.

Fig. 5 zeigt die Lochschiene 20 mit der Lochschienenkulisse 22 und der Profilschiene 24.

Die Lochschienenkulisse 22 wird derart in dafür vorgesehene Aussparungen der Paneele auf dem Frachtdeck 12 eingebracht, dass diese von außen zugänglich ist.

Wie anhand der Fig. 4 ersichtlich, werden in den Lochschienenkulissen 22 verschiedene Funktionseinheiten verankert. Am Beispiel der ersten Lochschienen 20a, 20a' lässt sich erkennen, dass in diesen Mittelführungsriegel 80, 80' verankert sind.

Neben den Mittelführungsriegeln 80, 80' können auch andere Riegel in den Lochschienen angebracht werden, wie dies anhand der Fig. 4, insbesondere in Verbindung mit den zweiten und dritten Lochschienen 20b, 20c, ersichtlich ist.

Neben den Lochschienen 20 sind auf dem erfindungsgemäßen Frachtdeck 12 auch Fittingelemente 40 vorgesehen. Im Unterschied zu den Lochschienen 20 haben die Fittingelemente 40 der gezeigten Ausführungsform keine Profilschienen, die mehrere Querträger 17 überspannen. Die Fittingelemente 40 sind unmittelbar an Querträgern angebracht. Aufgrund der fehlenden Profilschienen sind die deutlich leichter, so dass das Gewicht des Frachtdecks 12 insgesamt abnimmt.

Die Fittingelemente sind wie erläutert, entlang von vorgegebenen virtuellen Linien montiert. Diese sind in der Fig. 4 gestrichelt dargestellt. Konkret gibt es Linien für die ersten Fittingelemente 40a, zweiten Fittingelemente 40b, dritten Fittingelemente 40c und vierten Fittingelemente 40d. Am Randbereich des Frachtdecks 12 ist besonders hervorzuheben, dass hier eine Seitenführung 100 montiert ist. Diese Seitenführung 100 umfasst mehrere Seitenführungsrahmen 102, 102', 102", auf denen eine Seitenführungsschiene 104 angeordnet ist, die die Seitenführungsrahmen 102, 102', 102" miteinander verbindet. Die Seitenführungsrahmen 102, 102', 102" sind jeweils an drei Positionen mit dem Frachtdeck 12 verbunden. Hierbei handelt es sich um die dritten Fittingelemente 40c, die Lochschienenkulissen 22 der vierten Lochschienen sowie die vierten Fittingelemente 40d. Die Seitenführungsschiene 104 und die vierte Lochschiene zusammen mit den mehreren Befestigungsbereichen tragen wesentlich zur Versteifung der Seitenführung sowie des gesamten Frachtdecks 12 bei. Auf das Vorsehen von zusätzlichen Lochschienen 20 kann an dieser Stelle verzichtet werden.

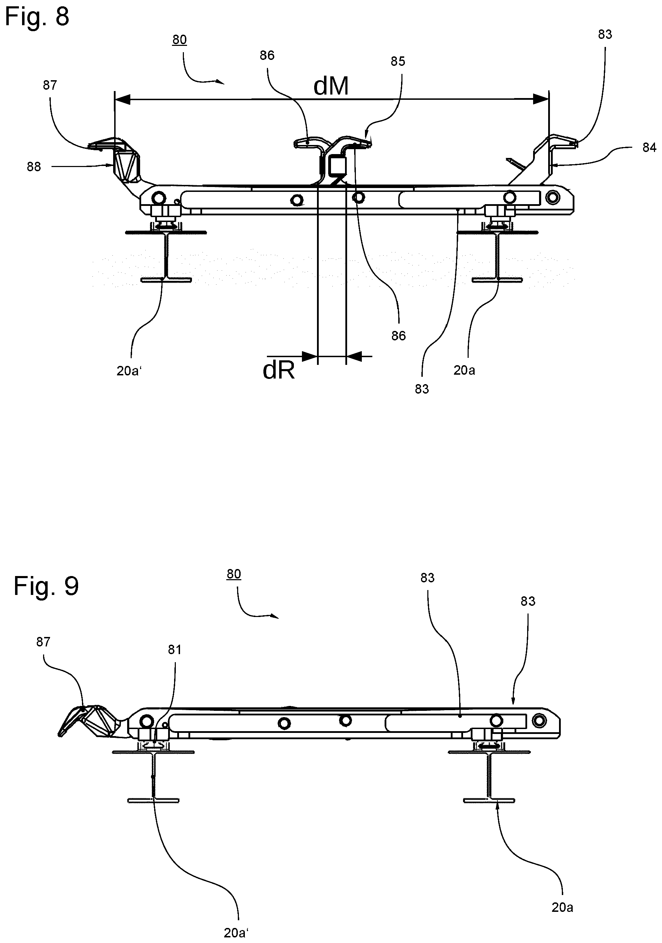

Die konkrete Ausgestaltung der Mittelführungsriegel 80, 80' sowie deren Anordnung ist im Detail in den Fig. 8-10 gezeigt. Die Fig. 8 zeigt den Mittelführungsriegel 80, der baugleich ist zum Mittelführungsriegel 80' in einer aufgestellten Konfiguration. Grundsätzlich ist zunächst festzustellen, dass der Mittelführungsriegel 80 an den ersten Lochschienen 20a, 20a' befestigt ist. Hierfür umfasst der Mittelführungsriegel 80 entsprechende Lochschieneneinsätze 81. Der Mittelführungsriegel 80 weist einen Mittelriegel-Rahmen 82 auf. In diesen Mittelriegel-Rahmen 82 sind auf der einen Seite eine Sicherungskralle 83 und auf der anderen Seite eine Seiten-Führungskralle 87 angeordnet.

Die Seiten-Führungskralle 87 ist dazu ausgebildet ULDs, insbesondere an deren Unterkanten, zu führen, so dass mittels der Seiten-Führungskrallen 87 eine Förderbahn für ULDs vorgegeben wird. Das Führen erfolgt im Wesentlichen entlang der Anschlagflächen 88. In dem gezeigten Ausführungsbeispiel verfügen die Seiten-Führungskrallen 87 über Flügel, die Rampen bilden, so dass sich die Seiten-Führungskrallen 87 absenken, wenn sie seitlich (X-Richtung) von ULDs überfahren werden. Bevorzugt weisen die verwendeten Mittelführungsriegel 80 eine Mechanik auf, die dafür sorgt, dass sich die Seiten-Führungskrallen (87) nach dem sie überfahren wurden wieder in eine Arbeitsposition begeben. Zur Aufnahme von Z-Lasten sind Nasen vorgesehen, die je nach Ausführung seitwärts wegklappen können.

Die Sicherungskrallen 83 haben eine deutlich schmälere Fläche und verfügen anders als die Seiten-Führungskralle 87 über keine Flügel. Sie sind derart dimensioniert, dass sie in hierfür vorgesehene Ausnehmungen eingreifen können, um die ULDs, insbesondere Paletten in X-Richtung abzusichern. Das heißt, dass die Sicherungskrallen 83 dazu ausgebildet sind, mit Anschlägen, sogenannten Taschen, in Eingriff zu gelangen, um ein Verrutschen der Last während des Fluges zu verhindern. Die Sicherungskrallen 83 haben Anschlagflächen 84.

Weiterhin umfasst der Mittelführungsriegel 80 ungefähr mittig eine Mittel-Führungskralle 85. Diese Mittel-Führungskralle kann insbesondere Container führen und in Z-Richtung absichern. Die Mittel-Führungskralle 85 verfügt über eine erste Anschlagfläche 86 sowie eine zweite Anschlagfläche 86'.

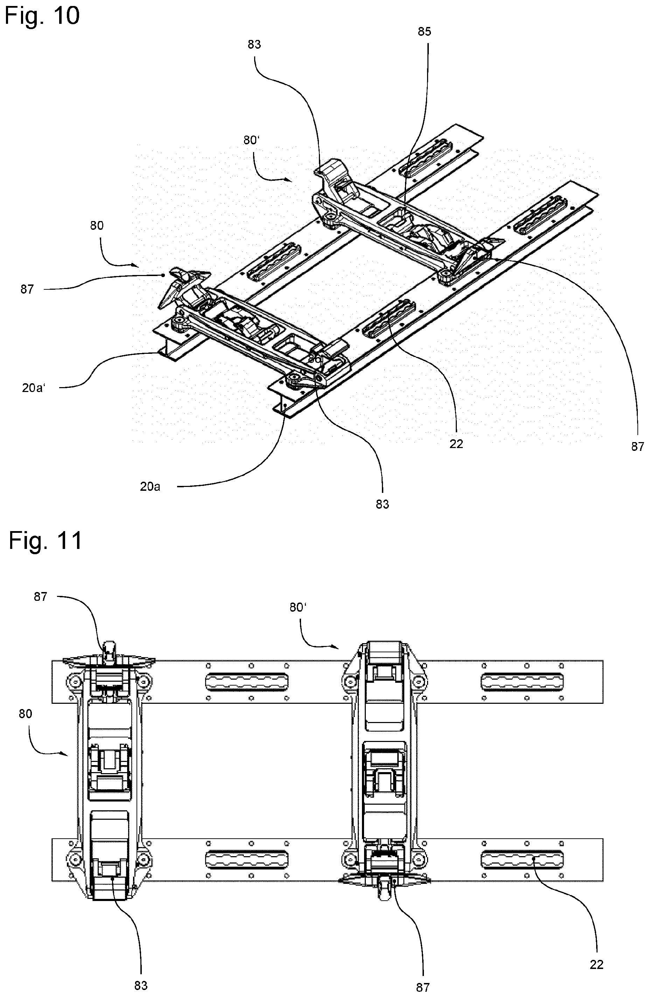

In einem Ausführungsbeispiel haben die Anschlagflächen 84, 88 der Sicherungskralle 83 und der Seiten-Führungskralle 87 einen Abstand dM von ca. 45 cm (vgl. auch Fig. 8). Diese Krallen sind besonders dafür geeignet, Paletten zu führen und zu befestigen. Ordnet man die Mittelführungsriegel 80, 80' so wechselseitig an, wie dies exemplarisch in Fig. 10 und 11 gezeigt ist, so ergibt sich ein Mittelgang zwischen den geladenen ULDs, in dem sich Ladepersonal bewegen kann. Insofern ist es möglich, die Sicherungskrallen 83 zu aktivieren.

Die Mittel-Führungskralle 85 mit den beiden Anschlagflächen 86, 86' kann deutlich größere ULDs führen und befestigen. Jedoch fällt bei einer entsprechenden Konfiguration der Wartungsgang weg. In einer bevorzugten Ausführungsform hat die Mittel-Führungskralle 85 einen Krallendurchmesser von ca. 2,5 cm (1 Zoll).

Bei dem Ausführungsbeispiel nach Fig. 10, 11 sind für die ersten Lochschienen 20a, 20a' Kulissenabstände von ca. 51 cm (20,125 Zoll) vorgesehen.

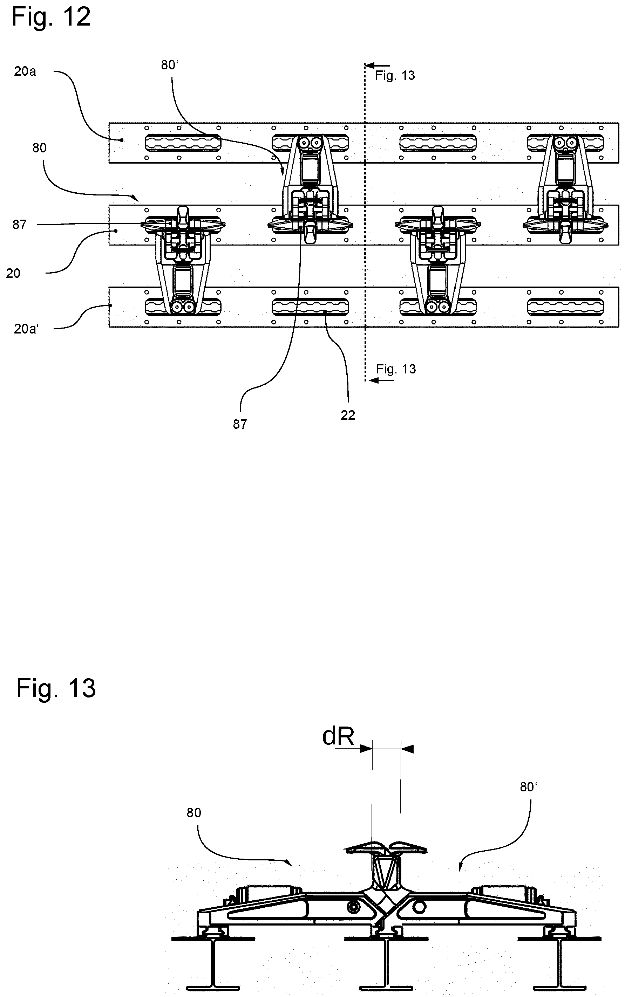

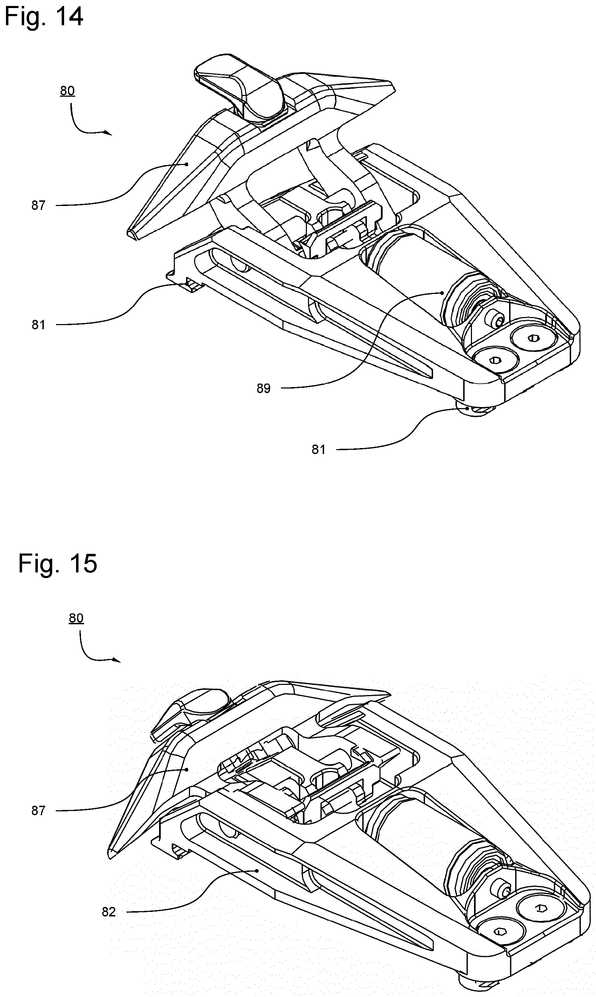

Die Fig. 12-15 zeigen alternative Ausgestaltungen der Mittelführungsriegel 80, 80' sowie ein entsprechend angepasstes Frachtdeck 12. Zunächst ist festzustellen, dass zur Montage der Mittelführungsriegel 80, 80', wie diese in den Fig. 12-15 gezeigt sind, eine zusätzliche Lochschiene 20 am Frachtdeck 12 entlang der Mittelebene ME vorgesehen werden muss. Somit ist es möglich, einen deutlich kürzeren Mittelführungsriegel 80, wie beispielsweise in den Fig. 14 und 15 im Detail gezeigt, zu montieren. Auch dieser alternative Mittelführungsriegel 80 verfügt über eine abklappbare und überfahrbare Seiten-Führungskralle 87. Fig. 14 zeigt den Riegel im hochgeklappten Zustand, während Fig. 15 diesen im abgeklappten Zustand zeigt. Um eine Führung entlang der Mittelebene ME bereitzustellen, lassen sich die Mittelführungsriegel 80, 80', wie in der Fig. 12 gezeigt, in unterschiedlichen Ausrichtungen anordnen. Weiterhin wird die Befestigung innerhalb der vorhandenen Lochschienen 20, 20a' variiert. So ist der Mittelführungsriegel 80 in der Lochschiene 20 sowie in der ersten Lochschiene 20a' verankert. Der Mittelführungsriegel 80' ist in der ersten Lochschiene 20a und der mittleren Lochschiene 20 verankert.

Bei dem Ausführungsbeispiel nach Fig. 12 und 13 sind für die ersten Lochschienen 20a Kulissenabstände von ca. 25 cm, insbesondere 25,5 cm (20,0625 Zoll) vorgesehen, so dass ein Paar von in dieselbe Richtung zeigenden Nasen (steuerbord oder backbord) der Seiten-Führungskrallen 87 einen Abstand von ca. 51 cm (20,125 Zoll) hat, um ausreichend Lasten in Z-Richtung aufnehmen zu können.

Die Seiten-Führungskrallen 87 der einzelnen Riegel befinden sich alle mehr oder weniger in einer Linie. Durch die besondere Anordnung können, wie in der Fig. 13 gezeigt, zwei Führungsebenen aufgespannt werden, die unmittelbar benachbart nebeneinander verlaufen. Deren Abstand kann sich beispielsweise auf den bereits angegebenen Krallendurchmesser dR von ca. 2,5 cm belaufen. Gleichzeitig ermöglicht es jedoch die besondere wechselseitige Anordnung, besonders viele Kräfte aufzunehmen.

Theoretisch ist es möglich, die Riegel in umgedrehter Position zu montieren, um so ULDs mit geringeren Maßen zu halten und abzustützen.

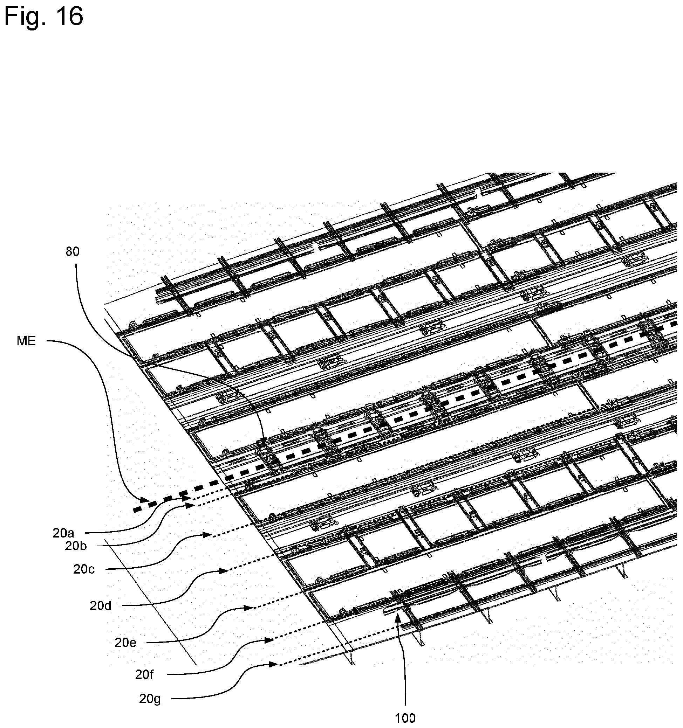

Fig. 16 zeigt ein weiteres erfindungsgemäßes Frachtdeck 12. Hier sind anstelle der fest mit den Querträgern 17 verbundenen Rollenbahnen 30 eine höhere Anzahl Lochschienen 20 vorgesehen. Letztendlich ermöglicht dies das komplette Frachtdeck 12 umzugestalten. Auch die Rollenbahnen 30 sind in einer abnehmbaren Ausführungsform vorgesehen, wobei diese ebenfalls über die Lochschienen 20 mit dem Frachtdeck verbunden werden können.

In der gezeigten Konfiguration sind auf jeder Seite des Frachtdecks sieben Lochschienen 20a, 20b, 20c, 20d, 20e, 20f, 20g vorgesehen. Auch die Anordnungen dieser Lochschienen 20a-20g ist symmetrisch zu der Mittelebene ME ausgeführt.

Auch auf dem Frachtdeck 12 gemäß Fig. 16 können die Mittelführungsriegel 80, 80', wie diese bereits in Verbindung mit den Fig. 8-11 erläutert wurden, eingesetzt werden. Auch hier ergeben sich die Vorteile, die bereits in Bezug auf diese Figuren erläutert wurden. Insbesondere können die Mittelführungsriegel 80, 80' in unterschiedliche Richtungen ausgerichtet werden, um eine Vielzahl von Funktionen an unterschiedlichen Positionen des Frachtdecks 12 wahrzunehmen.

Bei einem Ausführungsbeispiel des Frachtdecks 12 gemäß Fig. 16 ist auch eine ähnliche Seitenführung 100 vorgesehen, wie diese bereits in Verbindung mit der Fig. 4 beschrieben wurde. Im Unterschied zu dem Ausführungsbeispiel gemäß Fig. 4 sind die Seitenführungsrahmen 102, 102', 102" jedoch in den Lochschienen 20f und 20g verankert. Es erfolgt also eine Fixierung an zwei Lochschienen 20f, 20g.

Bei dem Ausführungsbeispiel nach Fig. 12 sind für die ersten Lochschienen 20a, 20a' Kulissenabstände von ca. 51 cm (20,125 Zoll) vorgesehen. Für die verbleibenden Lochschienen 20b bis 20g können durchgehende Lochschienenkulissen 22 vorgesehen sein. In einem Ausführungsbeispiel haben die äußeren Lochschienen, insbesondre die sechsten Lochschienen 20f und/oder die siebten Lochschienen 20g einen Kulissenabstand von ca. 50 bis 55, insbesondere ca. 52 cm.

Bei dem Ausführungsbeispiel nach Fig. 12 und 16 sind für die ersten Lochschienen 20a Kulissenabstände von ca. 25 cm, insbesondere 25,5 cm (20,0625 Zoll) vorgesehen, so dass ein Paar von in dieselbe Richtung zeigenden Nasen (steuerbord oder backbord) der Seiten-Führungskrallen 87 einen Abstand von ca. 51 cm (20,125 Zoll) hat, um ausreichend Lasten in Z-Richtung aufnehmen zu können.

In einem bevorzugten Ausführungsbeispiel gemäß Fig. 12 sind die Lochschienen 20 an den nachfolgenden Positionen ausgehend von der Mittelebene ME angeordnet:

| | | |
|---|---|---|
| • | Erste Lochschiene 20a: | ca. 21-25 cm, insbesondere ca. 21,5-23,5 cm; |
| • | Zweite Lochschiene 20b: | ca. 70-77 cm; |
| • | Dritte Lochschiene 20c: | ca. 123 cm; |
| • | Vierte Lochschiene 20d: | ca. 173-178 cm, insbesondere ca. 173 cm; |
| • | Fünfte Lochschiene 20e: | ca. 222-227 cm, insbesondere ca. 224 cm; |
| • | Sechste Lochschiene 20f: | ca. 248-259 cm; |
| • | Siebte Lochschiene 20g: | ca. 275 cm. |

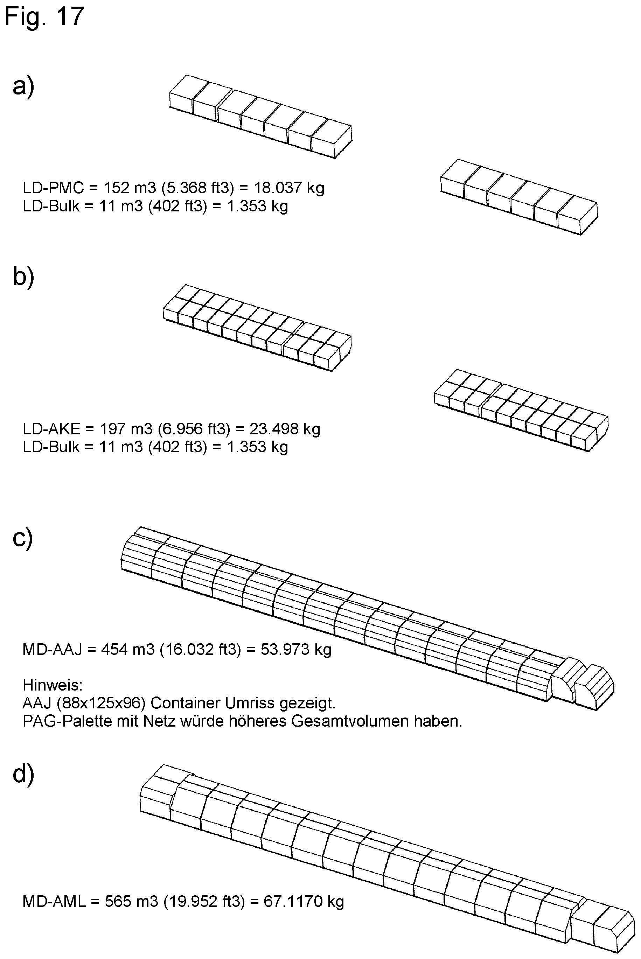

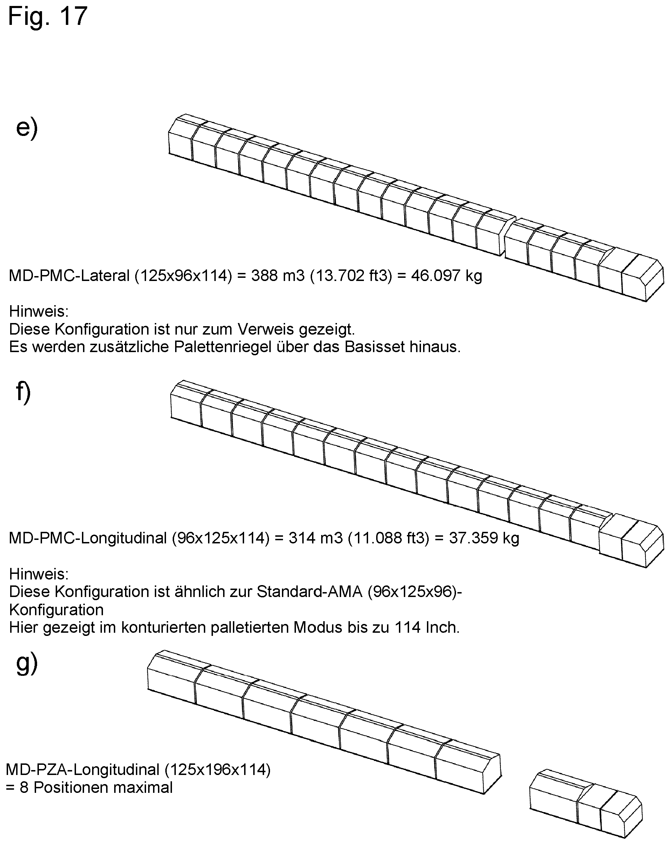

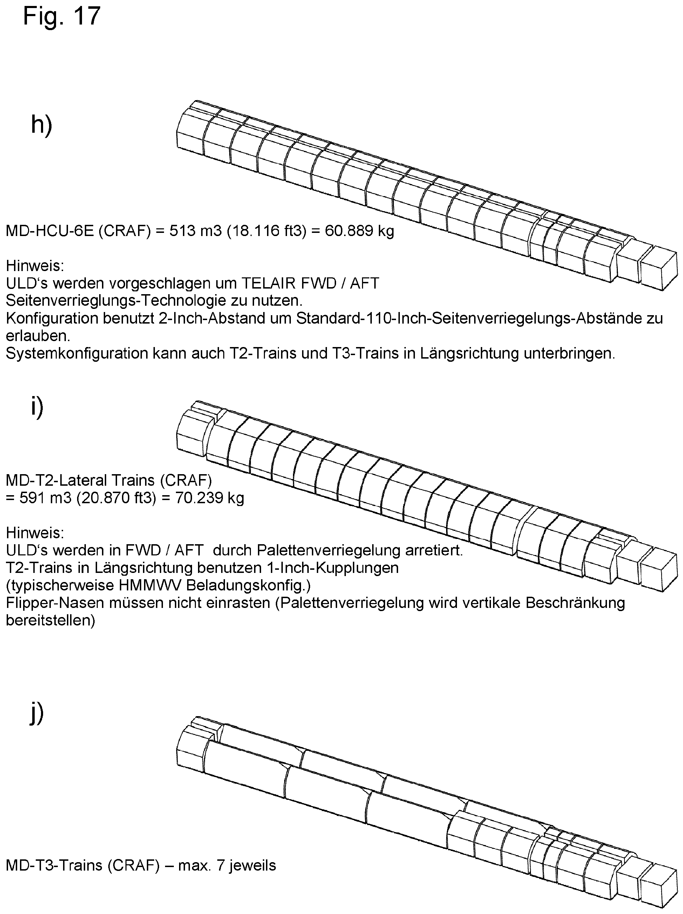

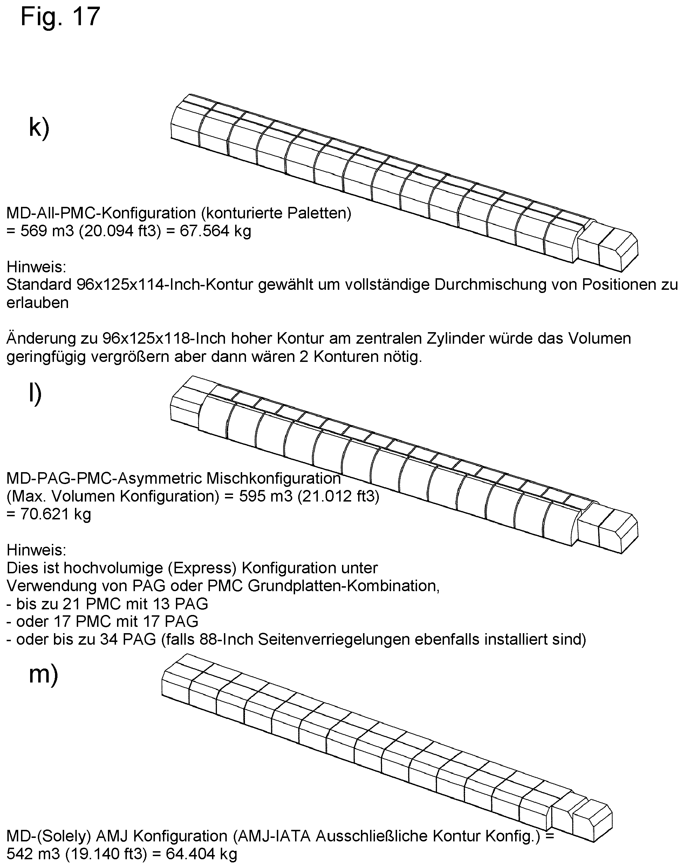

Fig. 17 zeigt unterschiedliche Beladekonfigurationen, die mittels des erfindungsgemäßen Frachtdecks umsetzbar sind. Je nach Länge des Flugzeugs 10 können die Anzahl der unterzubringenden Container oder Paletten variieren. Entscheidend für die Erfindung sind die Vielzahl an teilweise kombinierbaren Ladekonfigurationen. Exemplarisch sind nachfolgend einige mögliche Ladekonfigurationen angegeben:
- 30 AMJ Container;
- 30 AAJ Container (Beispiel c);
- 30 AMC Container;
- 26 AML Container und 3 AMJ Container (Beispiel d);
- 30 PMC Paletten (quer geladen) (Beispiel e);
- 26 PMC Paletten (längs geladen).

In einigen der beschriebenen Ausführungsbeispielen, insbesondere im Ausführungsbeispiel gemäß Fig. 4, sind die Rollenbahnen 30 fest mit den Tragstrukturen, insbesondere den Querträgern 17, verschraubt. In einem Ausführungsbeispiel lassen sich die Rollenbahnen 30 beispielsweise im Wartungsfall einfach demontieren. Hierfür können einfache Floorfittings verwendet werden. Alternativ können die Rollenbahnen 30 auf dünnen Blechen (Alu oder Composite), die die Funktion von Dichtblechen haben, aufsitzen. Eine lösbare Verschraubung kann dann mit den Blechen, z.B. unter Verwendung von Einnietmuttern, erfolgen.

Die Rollenbahnen 30 können als Längen Vielfache der gängigen Rahmen bzw. Spantenabstände ("Frame Spacing") haben. Bevorzugt sind Vielfache von ca. 51 cm (20 Zoll), ca. 53 cm (21 Zoll), ca. 56 cm (22 Zoll) oder ca. 63,5 cm (25 Zoll). Bevorzugt werden Rollenbahnen 30 mit einer Mindestlänge verwendet, die dem Fünffachen oder Sechsfachen des Spantenabstands entsprechen. In einem Ausführungsbeispiel sind die Rollenbahnen nicht länger als 7 m, insbesondre nicht länger als 6,6 m. Beispielsweise können Sie eine Länge zwischen 5 und 6,5 m haben.

Die beschriebenen Rollenbahnen 30 (vgl. insbesondere Fig. 7) sind einstückig ausgebildet und lassen sich beispielsweise im Strangpressverfahren herstellen. Es ist aber erfindungsgemäß möglich mehrteilige Rollenbahnen, z.B. mit aufschraubbaren Seitenwangen zu verwenden.

In den Ausführungsbeispielen sind die Konfigurationen des Frachtdecks 12 teilweise als symmetrisch oder als im Wesentlichen symmetrisch bezeichnet. Dies bezieht sich bevorzugt nur auf die Montagelinien (MT) der einzelnen Komponenten.

Als Symmetrieebene wurde die Mittelebene (ME) vorgesehen. Diese kann mittig entlang der X-Richtung des Flugzeugs verlaufen. Es ist aber auch denkbar, das Frachtdeck 12 so auszubilden, dass es sich hinsichtlich der angegebenen Abstände auf eine Ebene bezieht, die relativ zur Mittelebene (ME) versetzt, z.B. um 1 bis 10 cm, verläuft.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 10: Flugzeug
- 11: Rumpf
- 12: oberes Deck/Frachtdeck
- 13: unteres Deck
- 14: Boden
- 17: Querträger
- 18: Bug
- 19: Heck

- 20, 20a,20a', 20b, 20c, 20d, 20e, 20f, 20g: Lochschiene
- 22: Lochschienenkulisse
- 24: Profilschiene
- 30, 30a, 30b, 30c, 30d: Rollenbahn
- 40, 40a, 40b, 40c, 40d: Fittingelement
- 42: Fitting-Lochschienenkulisse
- 80, 80': Mittelführungsriegel
- 81: Lochschieneneinsatz
- 82: Mittelriegel-Rahmen
- 83: Sicherungskralle
- 84: Anschlagfläche der Sicherungskralle
- 85: Mittel-Führungskralle
- 86, 86': Anschlagflächen der Mittel-Führungskralle
- 87: Seiten-Führungskralle
- 88: Anschlagfläche der Seiten-Führungskralle
- 89: Rolle

- 100: Seitenführung
- 102, 102', 102": Seitenführungsrahmen
- 104: Seitenführungsschiene
- ME: Mittelebene
- MT: Montagelinie/Montageebene
- dM: Krallendistanz
- dR: Krallendurchmesser
- X,Y, Z: X-Richtung, Y-Richtung, Z-Richtung

## Patentansprüche

1. Frachtdeck für ein Flugzeug (10) mit einer Mittelebene (ME), die sich mittig entlang der Längsrichtung (X) des Frachtdecks erstreckt, umfassend:
- erste Lochschienen (20a, 20a'), die parallel zur Mittelebene (ME) in einem Bereich zwischen 10 und 20 cm von der Mittelebene (ME) beabstandet angeordnet sind, wobei sich auf jeder Seite neben der Mittelebene (ME) eine erste Lochschiene (20a, 20a') befindet;
- einen ersten und einen zweiten Mittelführungsriegel (80) mit jeweils einem sich in eine Rahmenlängsrichtung erstreckenden Rahmen (82) und einer Seiten-Führungskralle (87), die jeweils eine Anschlagsfläche (88) umfasst,
wobei der erste und der zweite Mittelführungsriegel (80) jeweils in mindestens einer der ersten Lochschienen (20a, 20a') verankert sind; wobei der erste und der zweite Mittelführungsriegel (80) jeweils asymmetrisch in Bezug auf eine Querebene quer zur Rahmenlängsrichtung ausgebildet sind, wobei die Seiten-Führungskralle (87) des jeweiligen Mittelführungsriegels (80) an einem Ende des Rahmens (82) angeordnet ist,
wobei der erste und der zweite Mittelführungsriegel (80) abwechselnd so quer (Y) am Frachtdeck angeordnet sind, dass die Anschlagflächen (88) der Seiten-Führungskrallen (87) der ersten und der zweiten Mittelführungsriegel (80) in entgegengesetzte Richtungen zeigen.

2. Frachtdeck nach Anspruch 1,
**dadurch gekennzeichnet, dass**
in einem Segment des Frachtdecks zumindest ein Paar einer zweiten Lochschiene (20b) und ein Paar einer dritten Lochschiene (20c) vorgesehen ist.

3. Frachtdeck nach einem der vorhergehenden Ansprüche,
**gekennzeichnet durch**:
- mindestens eine erste Rollenbahn (30a), die vorzugsweise parallel zur Mittelebene (ME) in einem Bereich zwischen 44 und 57 cm, insbesondere zwischen 48 und 55 cm, von der Mittelebene (ME) beabstandet angeordnet ist; und/oder
- mindestens eine zweite Rollenbahn (30b), die vorzugsweise parallel zur Mittelebene (ME) in einem Bereich zwischen 95 und 110 cm, insbesondere zwischen 98 und 105 cm, von der Mittelebene (ME) beabstandet angeordnet ist; und/oder
- mindestens eine dritte Rollenbahn (30c), die vorzugsweise parallel zur Mittelebene (ME) in einem Bereich zwischen 145 und 160 cm, insbesondere zwischen 150 und 156 cm, von der Mittelebene (ME) beabstandet angeordnet ist; und/oder
- mindestens eine vierte Rollenbahn (30d), die vorzugsweise parallel zur Mittelebene (ME) in einem Bereich zwischen 200 und 210 cm, insbesondere zwischen 200 und 208 cm, von der Mittelebene (ME) beabstandet angeordnet ist.

4. Frachtdeck nach einem der vorhergehenden Ansprüche,
**dadurch gekennzeichnet, dass**
in einem Segment des Frachtdecks genau 8 oder 9 Lochschienen (20, 20a bis 20d) und/oder genau 8 Rollenbahnen (30, 30a bis 30d) angeordnet sind.

5. Frachtdeck nach einem der vorhergehenden Ansprüche,
**gekennzeichnet durch**:
- vorzugsweise auf Querträgern (17) des Flugzeugs (10) montierte Fittingelemente (40) mit einer Lochschienenkulisse (42), umfassend:
- mindestens ein erstes Fittingelement (40a), das in einem Abstand von zwischen 155 und 165 cm, insbesondere zwischen 157 und 163 cm**,** wobei sich eine Montagelinie des mindestens einen ersten Fittingelements in einem Abstand von ca. 161 cm, von der Mittelebene (ME) entfernt montiert ist; und/oder
- mindestens ein zweites Fittingelement (40b), das, vorzugsweise unmittelbar benachbart zum ersten Fittingelement (40a), in einem Abstand von zwischen 163 und 175 cm, insbesondere zwischen 165 und 170 cm , wobei sich eine Montagelinie des mindestens zweiten Fittingelements (40a) in einem Abstand von ca. 168 cm, von der Mittelebene (ME) entfernt montiert ist; und/oder
- mindestens ein drittes Fittingelement (40c), das in einem Abstand von zwischen 225 und 240 cm, insbesondere zwischen 228 und 236 cm**,** wobei sich eine Montagelinie des mindestens einen dritten Fittingelements (40a) in einem Abstand von ca. 234 cm, von der Mittelebene (ME) entfernt montiert ist; und/oder
- mindestens ein viertes Fittingelement (40d), das in einem Abstand von zwischen 260 und 280 cm, insbesondere zwischen 265 und 276 cm**,** wobei sich eine Montagelinie des mindestens einen vierten Fittingelements (40a) in einem Abstand von ca. 275 cm, von der Mittelebene entfernt montiert ist.

6. Frachtdeck nach Anspruch 5,
**dadurch gekennzeichnet, dass**
ein Paar von Fittingelementen (40), insbesondere umfassend das dritte und vierte Fittingelement (40c, 40d), wechselseitig zu einer vierten Lochschienen (20d) angeordnet ist, wobei jeweils mindestens eine Seitenführung (100) an dem Paar von Fittingelementen (40c, 40d) sowie an der vierten Lochschiene (20d) befestigt ist.

7. Frachtdeck nach einem der vorhergehenden Ansprüche,
**dadurch gekennzeichnet, dass**
in mindestens einem Segment jeweils ein Paar von ersten bzw. zweiten bzw. dritten bzw. vierten Rollenbahnen (30a bis 30d) symmetrisch zur Mittelebene (ME) angeordnet ist und/oder
in mindestens einem Segment jeweils ein Paar von ersten bzw. zweiten bzw. dritten bzw. vierten Lochschienen (20a bis 20d) symmetrisch zur Mittelebene (ME) angeordnet ist und/oder
in mindestens einem Segment jeweils ein Paar von ersten bzw. zweiten bzw. dritten bzw. vierten Fittingelementen (40a bis 40d) symmetrisch zur Mittelebene (ME) angeordnet ist.

8. Frachtdeck nach einem der vorhergehenden Ansprüche, insbesondere nach Anspruch 7,
**dadurch gekennzeichnet, dass**
die Mittelführungsriegel (80) jeweils in den zwei ersten Lochschienen (20a, 20a') verankert sind und an einem Ende mindestens eine absenkbare Sicherungskralle (83) aufweisen.

9. Frachtdeck nach einem der vorhergehenden Ansprüche, insbesondere nach Anspruch 7 oder 8,
**dadurch gekennzeichnet, dass**
die Mittelführungsriegel (80) mindestens in einem Segment derart ausgebildet und angeordnet oder anordenbar sind, dass die Anschlagflächen (88) der Seiten-Führungskrallen (87) in einer Konfiguration und/oder Anordnung einen Mittelgang begrenzen, wobei die Anschlagflächen (88) der Seiten-Führungskrallen (87) in dieser Konfiguration bzw. Anordnung mindestens 15 cm, insbesondere mindestens 20 cm, vorzugsweise ca. 21 cm, von der Mittelebene (ME) beabstandet sind.

10. Frachtdeck nach einem der vorhergehenden Ansprüche, insbesondere nach einem der Ansprüche 7 bis 9,
**dadurch gekennzeichnet, dass**
mindestens einer der Mittelführungsriegel (80) eine abklappbare Mittel-Führungskralle (85) mit zwei wechselseitigen Anschlagflächen (86) und/oder an einem Ende eine/die Sicherungskralle (83) und an dem anderen Ende eine/die Seiten-Führungskralle (87) umfasst, wobei eine Anschlagfläche (88) der Seiten-Führungskralle (87) in einer aufgestellten Position in eine entgegengesetzte Richtung ausgerichtet ist wie eine Anschlagfläche (84) der Sicherungskralle (83).

11. Frachtdeck nach einem der vorhergehenden Ansprüche,
**dadurch gekennzeichnet, dass**
mindestens einer der Mittelführungsriegel (80) die folgenden Merkmale aufweist:
- eine/die, insbesondere abklappbar, im Rahmen (82) gelagerte Sicherungskralle (83) zum Absichern von Frachtstücken in X-Richtung;
- wobei die Sicherungskralle (83) zwei wechselseitige Anschlagflächen (84) aufweist, und
- wobei die Seiten-Führungskralle (87) insbesondere abklappbar, im Rahmen (82) gelagert ist; und
- wobei die Anschlagflächen (88) der Seiten-Führungskralle (87) und die Anschlagsflächen (84) der Sicherungskralle (83) in einer aufgestellten Position mindestens 30 cm, insbesondere mindestens 40 cm, vorzugsweise ca. 43 cm voneinander beabstandet sind, und
- die Anschlagflächen (88, 84) der Sicherungskralle (83) und der Seiten-Führungskralle (87) jeweils in entgegengesetzte Richtungen ausgerichtet sind.

12. Frachtdeck nach Anspruch 11,
**dadurch gekennzeichnet, dass**
der Mittelführungsriegel (80) die folgenden Merkmale aufweist:
- eine/die, insbesondere abklappbar, im Rahmen (82) gelagerte Mittel-Führungskralle (85) mit einer ersten Anschlagfläche (86) und einer zweiten Anschlagfläche (86'), die jeweils in entgegengesetzte Richtungen ausgerichtet und vorzugsweise mindestens 2 cm, insbesondere ca. 2,5 cm, voneinander beabstandet sind.

13. Frachtdeck nach einem der Ansprüche 11 oder 12,
**dadurch gekennzeichnet, dass**
der Mittelführungsriegel (80) die folgenden Merkmale aufweist:
- die Mittel-Führungskralle (85) ist derart angeordnet, dass in einer aufgestellten Position die Anschlagfläche (84) der Sicherungskralle (83) gleich weit von der ersten Anschlagfläche (86) der Mittel-Führungskralle (85) beabstandet ist, wie die Anschlagfläche (88) der Seiten-Führungskralle (87) von der zweiten Anschlagfläche (86') der Mittel-Führungskralle (85).

14. Flugzeug mit einem Frachtdeck nach einem der Ansprüche 1 bis 13.

## Claims

1. Cargo deck for an aircraft (10) having a center plane (ME), which extends centrally along the longitudinal direction (X) of the cargo deck, comprising:
- first perforated rails (20a, 20a'), which are arranged parallel to the center plane (ME) in a range between 10 and 20 cm spaced apart from the center plane (ME), wherein a first perforated rail (20a, 20a') is located on each side adjacent to the center plane (ME);
- a first and a second center guide bar (80), each having a frame (82) extending in a frame longitudinal direction and a lateral guide claw (87), each of which comprises a stop surface (88),
wherein the first and the second center guide bar (80) are each anchored in at least one of the first perforated rails (20a, 20a');
wherein the first and the second center guide bars (80) are each formed asymmetrically in relation to a transverse plane transverse to the frame longitudinal direction, wherein the lateral guide claw (87) of the respective center guide bar (80) is arranged at one end of the frame (82),
wherein the first and the second center guide bars (80) are alternately arranged transversely (Y) on the cargo deck such that the stop surfaces (88) of the lateral guide claws (87) of the first and the second center guide bars (80) point in opposite directions.

2. Cargo deck as claimed in claim 1,
**characterized in that**
at least one pair of a second perforated rail (20b) and one pair of a third perforated rail (20c) is provided in one segment of the cargo deck.

3. Cargo deck as claimed in any one of the preceding claims,
**characterized by**
- at least one first roller conveyor (30a), which is preferably arranged parallel to the center plane (ME) in a range between 44 and 57 cm, in particular between 48 and 55 cm, spaced apart from the center plane (ME); and/or
- at least one second roller conveyor (30b), which is preferably arranged parallel to the center plane (ME) in a range between 95 and 110 cm, in particular between 98 and 105 cm, spaced apart from the center plane (ME); and/or
- at least one third roller conveyor (30c), which is preferably arranged parallel to the center plane (ME) in a range between 145 and 160 cm, in particular between 150 and 156 cm, spaced apart from the center plane (ME); and/or
- at least one fourth roller conveyor (30d), which is preferably arranged parallel to the center plane (ME) in a range between 200 and 210 cm, in particular between 200 and 208 cm, spaced apart from the center plane (ME).

4. Cargo deck as claimed in any one of the preceding claims,
**characterized in that**
precisely 8 or 9 perforated rails (20, 20a to 20d) and/or precisely 8 roller conveyors (30, 30a to 30d) are arranged in one segment of the cargo deck.

5. Cargo deck as claimed in any one of the preceding claims,
**characterized by**:
- fitting elements (40), preferably mounted on crossbeams (17) of the aircraft (10), having a perforated rail link (42), comprising:
- at least one first fitting element (40a), which is mounted at a distance of between 155 and 165 cm, in particular between 157 and 163 cm, wherein a mounting line of the at least one first fitting element is mounted at a distance of approximately 161 cm, from the center plane (ME); and/or
- at least one second fitting element (40b), which is mounted, preferably directly adjacent to the first fitting element (40a), at a distance of between 163 and 175 cm, in particular between 165 and 170 cm, wherein a mounting line of the at least one second fitting element (40a) is mounted at a distance of approximately 168 cm, from the center plane (ME); and/or
- at least one third fitting element (40c), which is mounted at a distance of between 225 and 240 cm, in particular between 228 and 236 cm, wherein a mounting line of the at least one third fitting element (40a) is mounted at a distance of approximately 234 cm, from the center plane (ME); and/or
- at least one fourth fitting element (40d), which is mounted at a distance of between 260 and 280 cm, in particular between 265 and 276 cm, wherein a mounting line of the at least one fourth fitting element (40a) is mounted at a distance of approximately 275 cm, from the center plane.

6. Cargo deck as claimed in claim 5,
**characterized in that**
a pair of fitting elements (40), in particular comprising the third and fourth fitting elements (40c, 40d), is arranged on opposite sides of a fourth perforated rail (20d), wherein in each case at least one lateral guide (100) is fastened on the pair of fitting elements (40c, 40d) and on the fourth perforated rail (20d).

7. Cargo deck as claimed in any one of the preceding claims,
**characterized in that**
at least one pair of first and/or second and/or third and/or fourth roller conveyors (30a to 30d) is arranged symmetrically in relation to the center plane (ME) in each case in at least one segment and/or
at least one pair of first and/or second and/or third and/or fourth perforated rails (20a to 20d) is arranged symmetrically in relation to the center plane (ME) in each case in at least one segment and/or
at least one pair of first and/or second and/or third and/or fourth fitting elements (40a to 40d) is arranged symmetrically in relation to the center plane (ME) in each case in at least one segment.

8. Cargo deck as claimed in any one of the preceding claims,
in particular as claimed in claim 7,
**characterized in that**
the center guide bars (80) are each anchored in the two first perforated rails (20a, 20a') and have at least one securing claw (83), which can be lowered, on one end.

9. Cargo deck as claimed in any one of the preceding claims,
in particular as claimed in claim 7 or 8,
**characterized in that**
the center guide bars (80) are formed in at least one segment and arranged or arrangeable such that the stop surfaces (88) of the lateral guide claws (87) delimit a center aisle in one configuration and/or arrangement, wherein the stop surfaces (88) of the lateral guide claws (87) are spaced apart in this configuration or arrangement by at least 15 cm, in particular at least 20 cm, preferably approximately 21 cm, from the center plane (ME).

10. Cargo deck as claimed in any one of the preceding claims,
in particular as claimed in any one of claims 7 to 9,
**characterized in that**
at least one of the center guide bars (80) comprises a center guide claw (85), which can be folded down, having two stop surfaces (86) on opposite sides and/or a/the securing claw (83) at one end and a/the lateral guide claw (87) at the other end, wherein a stop surface (88) of the lateral guide claw (87), in an upright position, is oriented in an opposite direction to a stop surface (84) of the securing claw (83).

11. Cargo deck as claimed in any one of the preceding claims,
**characterized in that**
at least one of the center guide bars (80) has the following features:
- a securing claw (83), which can in particular be folded down and is mounted in the frame (82), for securing pieces of cargo in the X direction;
- wherein the securing claw (83) has two stop surfaces (84) on opposite sides, and
- wherein the lateral guide claw (87) is mounted, in particular so it can be folded down, in the frame (82); and
- wherein the stop surfaces (88) of the lateral guide claw (87) and the stop surfaces (84) of the securing claw (83) are spaced apart from one another in an upright position by at least 30 cm, in particular at least 40 cm, preferably approximately 43 cm, and
- the stop surfaces (88, 84) of the securing claw (83) and the lateral guide claw (87) are each oriented in opposite directions.

12. Cargo deck as claimed in claim 11,
**characterized in that**
the center guide bar (80) has the following features:
- a/the center guide claw (85), which in particular can be folded down and is mounted in the frame (82), having a first stop surface (86) and a second stop surface (86'), which are each oriented in opposite directions and are preferably spaced apart from one another by at least 2 cm, in particular approximately 2.5 cm.

13. Cargo deck as claimed in either one of claims 11 or 12,
**characterized in that**
the center guide bar (80) has the following features:
- the center guide claw (85) is arranged such that, in an upright position, the stop surface (84) of the securing claw (83) is spaced apart at an equal distance from the first stop surface (86) of the center guide claw (85) as the stop surface (88) of the lateral guide claw (87) from the second stop surface (86') of the center guide claw (85).

14. Aircraft having a cargo deck as claimed in any one of claims 1 to 13.

## Revendications

1. Pont de fret pour un aéronef (10), avec un plan médian (ME) qui s'étend au milieu dans le sens de la longueur (X) du pont de fret, comprenant :
- des premiers rails perforés (20a, 20a') disposés parallèlement au plan médian (ME) dans une zone distante de 10 à 20 cm du plan médian (ME), un premier rail perforé (20a, 20a') se trouvant à côté du plan médian (ME) de chaque côté ;
- une première barre de guidage central et une deuxième (80) munies chacune d'un cadre (82) qui s'étend dans un sens longitudinal du cadre et d'une griffe de guidage latéral (87) qui comprend une surface de butée (88) respective,
dans lequel les première et deuxième barres de guidage central (80) sont ancrées chacune dans au moins un des premiers rails perforés (20a, 20a'),
dans lequel les première et deuxième barres de guidage central (80) sont formées chacune de façon asymétrique par rapport à un plan transversal perpendiculaire au sens longitudinal du cadre, la griffe de guidage latéral (87) de chaque barre de guidage central (80) étant disposée à une extrémité du cadre (82),
dans lequel les première et deuxième barres de guidage central (80) sont disposées alternativement transversalement (Y) par rapport au pont de fret de telle manière que les surfaces de butée (88) des griffes de guidage latéral (87) de la première barre de guidage central et de la deuxième (80) pointent dans des directions opposées.

2. Pont de fret selon la revendication 1, **caractérisé en ce qu'**au moins une paire d'un deuxième rail perforé (20b) et une paire d'un troisième rail perforé (20c) sont prévues dans un segment du pont de fret.

3. Pont de fret selon l'une des revendications précédentes, **caractérisé en ce qu'**il comprend :
- au moins une première piste à rouleaux (30a) qui est disposée de préférence parallèlement au plan médian (ME) dans une zone distante de 44 à 57 cm, en particulier de 48 à 55 cm, du plan médian (ME) et/ou
- au moins une deuxième piste à rouleaux (30b) qui est disposée de préférence parallèlement au plan médian (ME) dans une zone distante de 95 à 110 cm, en particulier de 98 à 105 cm, du plan médian (ME) et/ou
- au moins une troisième piste à rouleaux (30c) qui est disposée de préférence parallèlement au plan médian (ME) dans une zone distante de 145 à 160 cm, en particulier de 150 à 156 cm, du plan médian (ME) et/ou
- au moins une quatrième piste à rouleaux (30d) qui est disposée de préférence parallèlement au plan médian (ME) dans une zone distante de 200 à 210 cm, en particulier de 200 à 208 cm, du plan médian (ME).

4. Pont de fret selon l'une des revendications précédentes, **caractérisé en ce qu'**exactement 8 ou 9 rails perforés (20, 20a à 20d) et/ou exactement 8 pistes à rouleaux (30, 30a à 30d) sont disposés dans un segment du pont de fret.

5. Pont de fret selon l'une des revendications précédentes, **caractérisé en ce qu'**il comporte
- des éléments de ferrure (40) munis d'une coulisse de rail perforé (42), montés de préférence sur des traverses (17) de l'aéronef (10), comprenant :
- au moins un premier élément de ferrure (40a), monté dans une zone distante de 155 à 165 cm, en particulier de 157 à 163 cm du plan médian (ME), une ligne de montage de l'au moins un premier élément de ferrure se trouvant à une distance d'environ 161 cm, et/ou
- au moins un deuxième élément de ferrure (40b) qui est monté, de préférence au voisinage immédiat du premier élément de ferrure (40a), dans une zone distante de 163 à 175 cm, en particulier de 165 à 170 cm du plan médian (ME), une ligne de montage de l'au moins un
deuxième élément de ferrure (40a) se trouvant à une distance d'environ 168 cm, et/ou
- au moins un troisième élément de ferrure (40c), monté dans une zone distante de 225 à 240 cm, en particulier de 228 à 236 cm du plan médian (ME), une ligne de montage de l'au moins un troisième élément de ferrure (40a) se trouvant à une distance d'environ 234 cm, et/ou
- au moins un quatrième élément de ferrure (40d), monté dans une zone distante de 260 à 280 cm du plan médian, en particulier de 265 à 276 cm, une ligne de montage de l'au moins un quatrième élément de ferrure (40a) se trouvant à une distance d'environ 275 cm.

6. Pont de fret selon la revendication 5, **caractérisé en ce qu'**une paire d'éléments de ferrure (40), comprenant en particulier le troisième élément de ferrure et le quatrième (40c, 40d), est disposée de part et d'autre d'un quatrième rail perforé (20d), au moins un guide latéral (100) respectif étant fixé à la paire d'éléments de ferrure (40c, 40d) ainsi qu'au quatrième rail perforé (20d).

7. Pont de fret selon l'une des revendications précédentes, **caractérisé en ce qu'**une paire de premières ou deuxièmes ou troisièmes ou quatrièmes pistes à rouleaux (30a à 30d) est disposée respectivement dans au moins un segment de façon symétrique par rapport au plan médian (ME) et/ou une paire de premiers ou deuxièmes ou troisièmes ou quatrièmes rails perforés (20a à 20d) est disposée respectivement dans au moins un segment de façon symétrique par rapport au plan médian (ME) et/ou
une paire de premiers ou deuxièmes ou troisièmes ou quatrièmes éléments de ferrure (40a à 40d) est disposée respectivement dans au moins un segment de façon symétrique par rapport au plan médian (ME).

8. Pont de fret selon l'une des revendications précédentes, en particulier selon la revendication 7, **caractérisé en ce que** les barres de guidage central (80) sont ancrées respectivement dans les deux premiers rails perforés (20a, 20a') et présentent à une extrémité au moins une griffe de sûreté (83) abaissable.

9. Pont de fret selon l'une des revendications précédentes, en particulier selon la revendication 7 ou 8, **caractérisé en ce que** les barres de guidage central (80) sont conçues et disposées ou peuvent être disposées, au moins dans un segment, de telle manière que les surfaces de butée (88) de griffes de guidage latéral (87) délimitent un couloir central dans une configuration et/ou une disposition, les surfaces de butée (88) des griffes de guidage latéral (87) étant distantes d'au moins 15 cm, en particulier d'au moins 20 cm, de préférence d'environ 21 cm, du plan médian (ME) dans cette configuration ou disposition.

10. Pont de fret selon l'une des revendications précédentes, en particulier selon l'une des revendications 7 à 9, **caractérisé en ce qu'**au moins une des barres de guidage central (80) comprend une griffe de guidage central (85) rabattable avec deux surfaces de butée (86) situées sur des côtés opposés et/ou présente à une extrémité une/la griffe de sûreté (83) et à l'autre extrémité une/la griffe de guidage latéral (87), une surface de butée (88) de la griffe de guidage latéral (87) étant orientée, dans une position relevée, dans une direction opposée à une surface de butée (84) de la griffe de sûreté (83).

11. Pont de fret selon l'une des revendications précédentes, **caractérisé en ce qu'**au moins une des barres de guidage central (80) présente les caractéristiques suivantes :
- une/la griffe de sûreté (83) supportée dans le cadre (82), en particulier de façon rabattable, pour assurer des éléments de fret sur l'axe X ;
- la griffe de sûreté (83) comportant deux surfaces de butée (84) situées sur des côtés opposés et
- la griffe de guidage latéral (87) étant supportée dans le cadre (82), en particulier de façon rabattable, et
- les surfaces de butée (88) de la griffe de guidage latéral (87) et les surfaces de butée (84) de la griffe de sûreté (83) étant distantes les unes des autres, dans une position relevée, d'au moins 30 cm, en particulier d'au moins 40 cm, de préférence d'environ 43 cm, et
- les surfaces de butée (88, 84) de la griffe de sûreté (83) et de la griffe de guidage latéral (87) étant orientées respectivement dans des directions opposées.

12. Pont de fret selon la revendication 11, **caractérisé en ce que** la barre de guidage central (80) présente les caractéristiques suivantes :
- une/la griffe de guidage central (85) supportée dans le cadre (82), en particulier de façon rabattable, avec une première surface de butée (86) et une deuxième surface de butée (86') qui sont orientées respectivement dans des directions opposées et qui sont distantes l'une de l'autre de préférence d'au moins 2 cm, en particulier d'environ 2,5 cm.

13. Pont de fret selon l'une des revendications 11 ou 12, **caractérisé en ce que** la barre de guidage central (80) présente les caractéristiques suivantes :
- la griffe de guidage central (85) est disposée de telle manière que, dans une position relevée, la surface de butée (84) de la griffe de sûreté (83) soit écartée de la même distance par rapport à la première surface de butée (86) de la griffe de guidage central (85) que la surface de butée (88) de la griffe de guidage latéral (87) par rapport à la deuxième surface de butée (86') de la griffe de guidage central (85).

14. Aéronef équipé d'un pont de fret selon l'une des revendications 1 à 13.
